(19) Europäisches Patentamt / European Patent Office / Office européen des brevets

(11) **EP 3 340 238 B1**

(12) **EUROPEAN PATENT SPECIFICATION**

(45) Date of publication and mention
of the grant of the patent:
**22.07.2020 Bulletin 2020/30**

(21) Application number: **16799218.9**

(22) Date of filing: **13.05.2016**

(51) Int Cl.:
*G10L 15/04* (2013.01)  *G10L 15/06* (2013.01)
*G10L 25/48* (2013.01)  *G10L 25/03* (2013.01)
*G10L 25/87* (2013.01)  *G11B 27/031* (2006.01)
*G11B 27/10* (2006.01)  *H04N 21/845* (2011.01)
*G10H 1/00* (2006.01)  *G11B 27/28* (2006.01)
*G11B 20/10* (2006.01)

(86) International application number:
**PCT/CN2016/081999**

(87) International publication number:
**WO 2016/188329 (01.12.2016 Gazette 2016/48)**

(54) **METHOD AND DEVICE FOR AUDIO PROCESSING**

VERFAHREN UND VORRICHTUNG ZUR AUDIOVERARBEITUNG

PROCÉDÉ ET DISPOSITIF DE TRAITEMENT AUDIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2015 CN 201510270567
25.05.2015 CN 201510271769
25.05.2015 CN 201510271014**

(43) Date of publication of application:
**27.06.2018 Bulletin 2018/26**

(73) Proprietor: **Guangzhou Kugou Computer
Technology Co., Ltd.
Guangdong Prov., 510660 (CN)**

(72) Inventor: **ZHAO, Weifeng
Shenzhen,
Guangdong 518000 (CN)**

(74) Representative: **Argyma
14 Boulevard de Strasbourg
31000 Toulouse (FR)**

(56) References cited:
**WO-A1-2014/096832      CN-A- 1 595 397
CN-A- 1 685 345        CN-A- 1 983 276
CN-A- 102 467 939      CN-A- 104 978 961
CN-A- 105 047 202      CN-A- 105 047 203
JP-A- 2001 175 294     JP-A- 2007 206 183
US-A1- 2015 045 920    US-B1- 6 243 676**

• WEI CHAI ET AL: "Structural analysis of musical
signals for indexing and thumbnailing",
PROCEEDINGS 2003 JOINT CONFERENCE ON
DIGITAL LIBRARIES. JCDL 2003. HOUSTON, TX,
MAY 27 - 31, 2003; [PROCEEDINGS JOINT
CONFERENCE ON DIGITAL LIBRARIES], LOS
ALAMITOS, CA : IEEE COMP. SOC, US, 27 May
2003 (2003-05-27), pages 27-34, XP058116228,
ISBN: 978-0-7695-1939-5

EP 3 340 238 B1

## Description

The present application claims the priority of the Chinese patent application that was filed to the State Intellectual Property Office on May 25th, 2015 with the application number of 201510270567.5 and the title of invention of "a method, device and terminal of audio processing.

The present application claims the priority of the Chinese patent application that was filed to the State Intellectual Property Office on May 25th, 2015 with the application number of 201510271769.1 and the title of invention of "a method, device and terminal of audio processing.

The present application claims the priority of the Chinese patent application that was filed to the State Intellectual Property Office on May 25th, 2015 with the application number of 201510271014.1 and the title of invention of "a method, device and terminal of audio processing.

## TECHNICAL FIELD

The present disclosure relates to the Internet technology, specifically relates to the audio processing technology, and particularly relates to the method, device and terminal for audio processing.

## BACKGROUND

As the Internet technology develops, a large amount of audio files such as songs and fragments of songs are stored in internet audio banks. And Internet audio applications such as karaoke systems and music listening systems are increasing. It is required to split an audio file into sections in many audio file use cases. For example, in karaoke systems, when a song is recorded in sections, it is required to split the song into sections. Another example, in song listening systems, when some specific fragments of a song is to be listened, it is required to split the song into sections, and so on. Presently, the splitting of audio files is usually done manually, so the efficiency of such processing is low, which cannot meet the demand of users on using audio files, and the intelligence of such audio processing is low. The publication WEI CHAI et al. "Structural Analysis of Musical Signals for Indexing and Thumbnailing", Proceedings 2003 JOINT CONFERENCE ON DIGITAL LIBRARIES, JCDL, 27-31 MAY 2003, pp.27-34 discloses an algorithm for detecting repetitions of each segment of fixed length in a music piece using dynamic programming. The patent application CN102467939A discloses a method for analysing repetition of lyrics and building paragraphs of repeated lyrics. The patent application WO2014/096832A1disloses processing an input signal to determine structural parameter feature data and involves segmenting audio content into segments. The patent application US2015/0045920A1 discloses a method of audio signal processing including segmenting and classifying the segments.

## SUMMARY

In order to improve the intelligence of audio processing, the embodiments of the present invention provide a method according to claim 1 and a device according to claim 15 for audio processing. The technical solutions are as following:

The embodiments of the present disclosure provide a method of audio processing, comprising:
acquiring the file data of the target audio file; constructing the relevance characteristic sequence according to the relevance of the characteristic data between the component elements of the file data; optimizing the relevance characteristic sequence according to the preset total number of sections; determining the section breaking time according to the values of at least one characteristic element in the relevance characteristic sequence that has been optimized; and dividing the target audio file into sections of the preset total number according to the timing of sections.

In the process, the present disclosure can, realize the section dividing of the target audio file according to the relevance between the component elements in the file data of the target audio file, such as the similarity degree between the single sentences of character, the time interval between the single sentences of character or the relevance between the audio frames, and can improve the efficiency of section dividing processing and the intelligence of audio processing.

In an embodiment of the present disclosure, the present disclosure can construct the subtitle characteristic sequence according to the similarity degree between the at least one single sentence of characters in the subtitle file of the corresponding target audio file, optimize the subtitle characteristic sequence according to the preset total number of sections, determine the section breaking times according to the values of the at least one characteristic element of characters in the subtitle characteristic sequence that has been optimized, and then divide the target audio file into sections of the preset total number according to the timing of sections. The audio processing realizes the section dividing of the target audio file based on the similarity characteristic of the single sentences of characters between the subtitle sections in the subtitle file and improves the efficiency of section dividing processing and the intelligence of audio processing.

In another embodiment of the present disclosure, the present disclosure can construct the time characteristic sequence according to the time interval between the at least one single sentence of characters in the subtitle file of the corresponding target audio file, adjust the values of the time characteristic elements in the time characteristic sequence according to the preset total number of sections, determine the section breaking time according to the value of at least one time characteristic element in the time characteristic sequence that has been adjusted, and then divide the target audio file into sections of the preset total number of sections according to the timing of sections. The audio processing realizes the section dividing of the target audio file based on the time interval characteristic of the single sentences of characters between the subtitle sections in the subtitle file and improves the efficiency of section dividing processing and the intelligence of audio processing.

In yet another embodiment of the present disclosure, the present disclosure can construct the peak value characteristic sequence according to the relevance of the audio data with at least one audio frame of the target audio file, regulate the peak value characteristic sequence, determine the section breaking times according to the values of at least one peak value characteristic element in the peak value characteristic sequence that has been regulated, and then divide the target audio file into sections according to the timing of sections. The audio processing process realizes the section dividing of the target audio file based on the relevance characteristic of the audio frames between the audio sections and improves the efficiency of section dividing processing and the intelligence of audio processing.

## BRIEF DESCRIPTION OF THE DRAWINGS

In order to clearly illustrate the technical solutions of the embodiments of the present disclosure, the drawings that are used in the embodiments will be briefly introduced below. Apparently, the drawings that are described below are merely some embodiments of the present disclosure, and a person skilled in the art can obtain other drawings based on these figures without paying creative work.

Fig. 1 is the flow chart of the method of audio processing that is provided by the embodiment of the present disclosure;
Fig. 2 is the flow chart of another method of audio processing that is provided by the embodiment of the present disclosure;
Fig. 3 is the schematic diagram of a device of audio processing that is provided by the embodiment of the present disclosure;
Fig. 4 is the schematic diagram of the embodiment of the constructing unit shown by Fig. 3;
Fig. 5 is the schematic diagram of the embodiment of the optimizing unit shown by Fig. 3;
Fig. 6 is the schematic diagram of the embodiment of the optimization processing unit shown by Fig. 5;
Fig. 7 is the schematic diagram of the embodiment of the determining unit shown by Fig. 3;
Fig. 8 is the flow chart of the method of audio processing that is provided by the embodiment of the present invention;
Fig. 9 is the flow chart of another method of audio processing that is provided by the embodiment of the present disclosure;
Fig. 10 is the schematic diagram of a device of audio processing that is provided by the embodiment of the present disclosure;
Fig. 11 is the schematic diagram of the embodiment of the constructing unit shown by Fig. 10;
Fig. 12 is the schematic diagram of the embodiment of the adjusting unit shown by Fig. 10;
Fig. 13 is the schematic diagram of the embodiment of the determining unit shown by Fig. 10;
Fig. 14 is the flow chart of the method of audio processing that is provided by the embodiment of the present disclosure;
Fig. 15 is the flow chart of another method of audio processing that is provided by the embodiment of the present disclosure;
Fig. 16 is the schematic diagram of a device of audio processing that is provided by the embodiment of the present disclosure;
Fig. 17 is the schematic diagram of the embodiment of the acquiring unit shown by Fig. 16;
Fig. 18 is the schematic diagram of the embodiment of the constructing units shown by Fig. 16;
Fig. 19 is the schematic diagram of the embodiment of the regulating unit shown by Fig. 16; and
Fig. 20 is the schematic diagram of the embodiment of the determining unit shown by Fig. 16.

## DETAILED DESCRIPTION OF THE EMBODIMENTS

In order to make the objectives, the technical solutions and the advantages of the present disclosure clearer, the embodiments of the present disclosure will be described below in further detail with reference to the drawings.

In the embodiments of the present disclosure, audio files may include, but are not limited to: files of songs, fragments of songs. Subtitle files may include, but are not limited to: files of lyrics, fragments of lyric. One audio file may correspond to one subtitle file. One subtitle file may be formed by at least one single sentence of characters successively.

Taking the song A as an example, the subtitle file that is corresponding to the song A may be expressed as follows:

[641, Th0], [641, 20] a1 [661, 60] a2 [721, 170] a3 [891, 200] a4 [1091, 70] a5 [1161, 180] a6 [1341, 20] a7 [1361, 50] a8
[1541, 180], [1541, 20] b1 [1561, 50] b2 [1611, 20] b3 [1631, 30] b4 [1661, 0] b5 [1661, 10] b6 [1671, 20] b7 [1701, 30] b8
[1871, 730], [1871, 60] c1 [1931, 100] c2 [2031, 110] c3 [2141, 200] c4 [2341, 70] c5 [2411, 60] c6 [2471, 50] c7 [2421, 80] c8

...

In the subtitle file that is corresponding to the song A, "a1a2a3a4a5a6a7a8", "b1b2b3b4b5b6b7b8" and "c1c2c3c4c5c6c7c8", for example, may be respectively used for representing one single sentence of characters, and the "[]" preceding the single sentences of characters are used for describing the time attributes of the corresponding single sentences of characters, usually with ms as the unit time. For example, the [641, Th0] is used for describing the time attribute of the single sentence of characters "a1a2a3a4a5a6a7a8", wherein the "641" represents the starting time of the single sentence of characters "a1a2a3a4a5a6a7a8", and the "Th0" represents the duration of the single sentence of characters "a1a2a3a4a5a6a7a8", and assuming that the song A lasts totally 5 minutes, the single sentence of characters "a1a2a3a4a5a6a7a8"starts from the 641ms, and lasts Th0ms before ending. In the single sentences of characters, the "[]" preceding each character is used to describe the time attribute of the corresponding character, usually with ms as the unit time. For example, the [641, 20] is used to describe the time attribute of the character "a1", wherein the "641" represents the starting time of the character "a1", and the "20" represents the duration of the character "a1". According to the order of the starting times, the order of the single sentences of character that the subtitle file comprises can be determined. For example, according to the description on the subtitle file that is corresponding to the song A, the single sentence of characters "a1a2a3a4a5a6a7a8"is the first single sentence of characters, the single sentence of characters "b1b2b3b4b5b6b7b8"is the second single sentence of characters, the single sentence of characters "c1c2c3c4c5c6c7c8" is the third single sentence of characters, and the rest can be deduced accordingly. Wherein, the single sentence of characters "a1a2a3a4a5a6a7a8" and the single sentence of characters "b1b2b3b4b5b6b7b8" are the preceding single sentences of the single sentence of characters "c1c2c3c4c5c6c7c8", the single sentence of characters "b1b2b3b4b5b6b7b8" and the single sentence of characters "c1c2c3c4c5c6c7c8" are subsequent single sentences of the single sentence of characters "a1a2a3a4a5a6a7a8", and the rest can be deduced accordingly. Further, the single sentence of characters "a1a2a3a4a5a6a7a8" is the neighboring and preceding single sentence of characters of the single sentence of characters "b1b2b3b4b5b6b7b8", the single sentence of characters "b1b2b3b4b5b6b7b8" is the neighboring and subsequent single sentence of characters of the single sentence of characters "a1a2a3a4a5a6a7a8", and the rest can be deduced accordingly. One audio file may be divided into multiple audio sections. The audio sections usually have certain repetitiveness. Accordingly, as subtitle file can be correspondingly divided into multiple subtitle sections, and the subtitle sections would have a certain similarity; that is, the single sentences of characters that are contained in the subtitle sections have a certain similarity. The embodiments of the present disclosure can base on the similarity between the single sentences of characters of the subtitle sections, to realize the section dividing of the target audio file.

One audio file may be divided into multiple audio sections. The audio sections usually have relatively long pauses therebetween, that is, the audio sections usually have relatively long time intervals therebetween. Accordingly, as subtitle file can be correspondingly divided into multiple subtitle sections, and the subtitle sections would have relatively long time intervals therebetween; that is, the single sentences of characters of the subtitle sections have relatively long time intervals therebetween. The embodiments of the present disclosure can base on the time interval of the single sentences of characters between the subtitle sections, to realize the section dividing of the target audio file.

In yet another embodiment of the present disclosure, an audio file comprises audio data, and the audio data (for example, PCM data) can be obtained by decoding the audio file (for example, PCM decoding). The audio data of an audio file may comprise at least one audio frame; that is, the audio data of an audio file may be rendered as a frame sequence that is formed by multiple audio frames successively. An audio file may be divided into multiple audio sections. The audio sections usually have certain repetitiveness; that is, the audio frames of different audio sections have certain relevance to each other. The embodiments of the present disclosure can base on the relevance of the audio frames between the audio sections to realize the section dividing of the target audio file.

Based on the above description, the embodiments of the present disclosure provide the method of audio processing, specifically comprising: acquiring data of the target audio file; according to relevance characteristic data between the component elements of the file data, constructing the relevance characteristic sequence; optimizing the relevance characteristic sequence according to the preset total number of section; determining the section breaking times according to the values of the at least one characteristic element in the relevance characteristic sequence that has been optimized; and dividing the target audio file into sections of the preset total number of sections according to the timing of section. In that, the present disclosure can, according to the relevance between the component elements in the data of the target audio file, such as the similarity degree between the single sentences of character, the time interval between the single sentences of characters or the relevance between the audio frames, realize the section dividing of the target audio file, and can improve the efficiency of section dividing processing and the intelligence of audio processing.

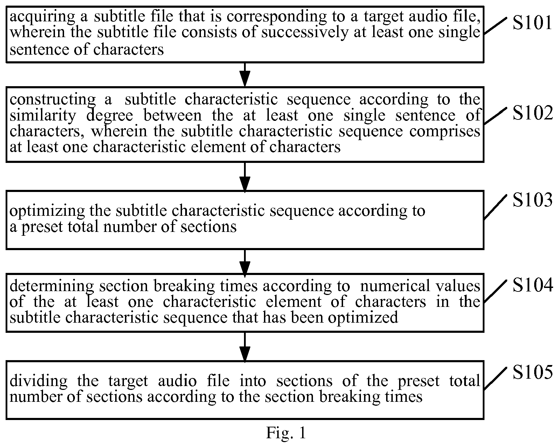

In order to make it easy to understand the present disclosure, the method of audio processing that is provided by the embodiments of the present disclosure will be described in details below with reference to Fig. 1 to Fig. 2.

Referring to Fig. 1, which is the flow chart of the method of audio processing that is provided by the embodiment of the present disclosure, the method may comprise the following Step S101 to Step S105.

S101, acquiring the subtitle file that is corresponding to the target audio file, wherein the subtitle file consists of successively at least one single sentence of characters.

One audio file corresponds to one subtitle file. In general, an Internet audio bank stores multiple audio files, the attributes of each audio file and the subtitle files that are corresponding to each audio file. In that, the attributes of the audio files may comprise, but are not limited to: the audio characteristics of the audio files, the identifications of the audio files, and so on. In this step the subtitle file that is corresponding to the target audio file from the Internet audio bank is acquired, and the specific way of acquiring may include but is not limited to: acquiring the subtitle file by looking up the subtitle file that is corresponding to the target audio file in the Internet audio bank based on the identification of the target audio file; or, by extracting an audio characteristic of the target audio file and matching that with the audio characteristics of the audio files in the Internet audio bank.

In the embodiment of the present disclosure, assuming that the target audio file is the song A, and the structure of the subtitle file that is corresponding to song A may refer to the example shown by the present embodiment, assuming that the subtitle file is formed by N (N is a positive integer) of single sentences of characters successively, and assuming that the N of single sentences of characters are expressed by $p(0)$ to $p(N-1)$, then, $p(0)$ may be used for expressing the first single sentence of characters "ala2a3a4a5a6a7a8", $p(1)$ may be used for expressing the second single sentence of characters "blb2b3b4b5b6b7b8", $p(2)$ may be used for expressing the third single sentence of characters "clc2c3c4c5c6c7c8", and, as the rest can be deduced accordingly, $p(N-1)$ is used for expressing the Nth single sentence of characters.

S102, constructing the subtitle characteristic sequence according to the similarity degree between the at least one single sentence of characters, wherein the subtitle characteristic sequence comprises at least one characteristic element of characters.

The subtitle characteristic sequence may be used for reflecting the similarity degree between the at least one single sentence of characters. This step may firstly calculate the similarity degree between the at least one single sentence of characters by using a similarity degree algorithm, wherein here it is required to calculate the similarity degree between each single sentence of characters and the single sentences of characters following it; that is, it is required to calculate the similarity degree between the $p(0)$ and the $p(1)$, the similarity degree between the $p(0)$ and the $p(2)$...the similarity degree between the $p(0)$ and the $p(N-1)$; to calculate the similarity degree between the $p(1)$ and the $p(2)$, the similarity degree between the $p(1)$ and the $p(3)$...the similarity degree between the $p(1)$ and the $p(N-1)$; and the rest can be deduced accordingly. In that, the similarity degree algorithm may comprise, but not is limited to: Levenshtein Distance algorithm, Longest Common Subsequences (LCS) algorithm, Heckel algorithm, Greedy String Tiling (GS) algorithm, and so on. Secondly, this step may construct the subtitle characteristic sequence according to the number, the order and the calculated similarity degree of the at least one single sentence of characters.

According to the example shown by the present embodiment, assuming that $s(n)$ is employed to express the subtitle characteristic sequence, the constructed subtitle characteristic sequence $s(n)$ comprises N of characteristic elements of characters, which are $s(0)$, $s(1)$ ...$s(N-1)$. In that, the numerical value of the $s(0)$ may be used for describing the similarity between the $p(0)$ and the single sentences of character after it, the numerical value of $s(1)$ may be used for describing the similarity between the $p(1)$ and the single sentences of character after it, and the rest can be deduced accordingly.

S103, optimizing the subtitle characteristic sequence according to the preset total number of sections.

The preset total number of sections may be set according to actual user requirement of the section dividing of the target audio file. Assuming that M (M is a positive integer and M>1) is employed to express the preset total number of sections, the objective to optimize the subtitle characteristic sequence $s(n)$ according to the preset total number of sections M is: to exactly divide the subtitle characteristic sequence $s(n)$ that has been optimized into M, the preset total number of sections, of subtitle sections, to meet actual requirement on the section dividing of the target audio file.

S104, determining the section breaking times according to the numerical values of the at least one characteristic element of characters in the subtitle characteristic sequence that has been optimized.

In that, the subtitle characteristic sequence $s(n)$ that has been optimized can be exactly divided into M, the preset total number of sections, of subtitle sections, and additionally, the numerical values of the characteristic element of characters in the subtitle characteristic sequence $s(n)$ may be used for describing the similarity between the single sentences of character. Therefore, according to the numerical values of the characteristic element of characters in the subtitle characteristic sequence $s(n)$ that has been optimized, the breaking points of M of subtitle sections can be determined, and further, the starting times and the end times of M of subtitle sections can be obtained from the subtitle file.

S105, dividing the target audio file into sections of the preset total number of sections according to the section breaking times. Because the audio file and the subtitle file corresponds to each other, therefore, according to the starting times and the end times of the obtained M of subtitle sections, correspondingly the target audio file can be divided into M of audio sections.

In the embodiment of the present disclosure, it can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of the at least one characteristic element of characters in the subtitle characteristic sequence that has been optimized, and then divide the target audio file into sections of the preset total number of sections according to the section breaking times. The audio processing process realizes the section dividing of the target audio file based on the similarity characteristic between the single sentences of characters in the subtitle sections, and improves the efficiency of section dividing processing and the intelligence of audio processing.

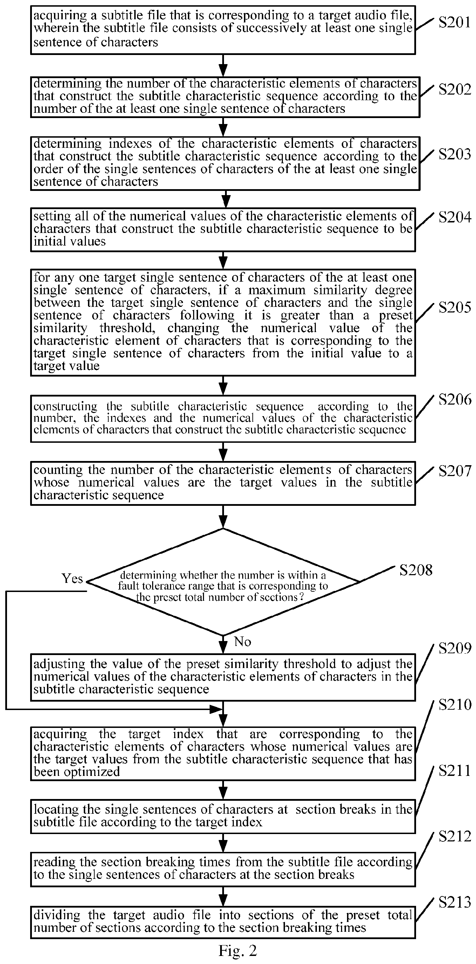

Referring to Fig. 2, which is the flow chart of another method of audio processing that is provided by the embodiment of the present disclosure, the method may comprise the following Steps S201 to Step S213.

S201, acquiring the subtitle file that is corresponding to the target audio file, wherein the subtitle file consists of successively the at least one single sentence of characters.

In the embodiment of the present disclosure, assuming that the target audio file is the song A, and the structure of the subtitle file that is corresponding to the song A may refer to the example shown by the present embodiment. Assuming that the subtitle file is formed by N (N is a positive integer) of single sentences of characters successively, and assuming that the N of single sentences of characters are expressed by p(0) to p(N-1), then, p(0) may be used for expressing the first single sentence of characters "a1a2a3a4a5a6a7a8", p(1) may be used for expressing the second single sentence of characters "b1b2b3b4b5b6b7b8", p(2) may be used for expressing the third single sentence of characters "c1c2c3c4c5c6c7c8", and, as the rest can be deduced accordingly, p(N-1) is used for expressing the Nth single sentence of characters.

Step S201 of the present embodiment may refer to Step S101 of the embodiment shown by Fig. 1, and will not be described in details here.

S202, determining the number of the characteristic element of characters that constructs the subtitle characteristic sequence according to the number of the at least one single sentence of characters.

The subtitle file is formed by N (N is a positive integer) single sentence of characters successively; that is, the number of the at least one single sentence of characters is N. Accordingly, this step may determine that the number of the characteristic element of characters in the subtitle characteristic sequence is also N, that is, the length of the subtitle characteristic sequence is N. Assuming that s(n) is employed to express the subtitle characteristic sequence, the constructed subtitle characteristic sequence s(n) comprises N of characteristic elements of characters, which are s(0), s(1)...s(N-1).

S203, according to the order of the single sentence of characters of the at least one single sentence of characters, determining the indexes of the characteristic element of characters that constructs the subtitle characteristic sequence.

The order of the N of single sentences of characters of the subtitle file is p(0), p(1)...p(N-1). Assuming that in the subtitle characteristic sequence s(n): s(0) corresponds to p(0), s(1) corresponds to p(1), and, as the rest can be deduced accordingly, s(N-1) corresponds to p(N-1), then, the index of s(0) in the subtitle characteristic sequence s(n) is 1, that is, the first characteristic element of characters; the index of s(1) is 2, that is, the second characteristic element of characters; and, as the rest can be deduced accordingly, the index of s(N-1) is N, that is, the Nth characteristic element of characters.

S204, setting all of the numerical values of the characteristic element of characters that constructs the subtitle characteristic sequence to be initial values.

The initial value may be set according to actual requirements, and in the present embodiment it may be assumed that the initial value is 0. Accordingly, this step may set the numerical values of all of the characteristic element of characters in the subtitle characteristic sequence s(n) to be 0, that is, s(0)=0, s(1)=0...s(N-1)=0.

S205, for any one target single sentence of characters of the at least one single sentence of characters, if the maximum similarity degree between the target single sentence of characters and the single sentence of characters following it is greater than the preset similarity threshold, then change the value of the characteristic element of characters that is corresponding to the target single sentence of characters from the initial value to the target value.

The particular process of this step S205 may comprise the following steps s11-s13:

s11, calculating the similarity degree between the at least one single sentence of characters by using a similarity degree algorithm, wherein it is required to calculate the similarity degree between each single sentence of characters and the single sentences of characters following it; that is, it is required to calculate the similarity degree between the p(0) and the p(1), the similarity degree between the p(0) and the p(2)...the similarity degree between the p(0) and the p(N-1); calculate the similarity degree between the p(1) and the p(2), the similarity degree between the p(1) and the p(3)...the similarity degree between the p(1) and the p(N-1); and the rest can be deduced accordingly. In that, the similarity degree algorithm may comprise, but is not limited to: Levenshtein Distance algorithm, Longest Common Subsequences (LCS) algorithm, Heckel algorithm, Greedy String Tiling (GS) algorithm, and so on. It should be noted that, in order to facilitate the calculating, the similarity degrees results from calculating are all normalized into the interval of [0, 1], wherein if the similarity degree between two single sentences of characters equals to 0, that indicates that the two single sentences of characters are totally different, and if the similarity degree between two single sentences of characters equals to 1, that indicates that the two single sentences of characters are totally the same.

s12, extracting the maximum similarity degree between each single sentence of characters and the single sentences of characters following it. For example, assuming that, by calculating, between the p(0) and the single sentences of characters following it p(1) to p(N-1), the maximum similarity degree is between the p(0) and the p(2) and it is Q02, then Q02 is extracted. As another example, assuming that, by calculating, between the p(1) and the single sentences of characters following it p(2) to p(N-1), the maximum similarity degree is between the p(1) and the p(5) and it is Q15, then Q15 is extracted, and so on.

s13, determining whether the extracted maximum similarity degrees are greater than the preset similarity threshold, and according to the judging result changing the numerical value of the corresponding characteristic element of characters. In that, the preset similarity threshold may be set according to actual requirements, and the preset similarity threshold may be expressed by Th, wherein $0 \leq Th \leq 1$. The target value may be set according to actual requirements, and the target value is greater than the initial value. The present embodiment may set the target value to be 1. According to the example shown by Step s12, for example, the present embodiment judges whether Q02 is greater than the preset similarity threshold Th, and if Q02 > Th, the present embodiment changes the numerical value of s(0) that is corresponding to p(0) from 0 to 1, that is, s(0)=1. As another example, the present embodiment determines whether Q15 is greater than the preset similarity threshold Th, and if Q15 > Th, the present embodiment changes the numerical value of s(1) that is corresponding to p(1) from 0 to 1, that is, s(1)=1, and so on.

S206, according to the numbers, the indexes and the numerical values of the characteristic element of characters that constructs the subtitle characteristic sequence, constructing the subtitle characteristic sequence.

The constructed subtitle characteristic sequence is s(n), wherein s(n) is formed by N of characteristic elements of characters (0), s(1)...s(N-1) successively, and the numerical values of the characteristic element of characters in the subtitle characteristic sequence s(n) form a sequence that consists of 0 and 1.

Step S202 to Step S206 of the present embodiment may be the particular detailed steps of Step S102 of the embodiment shown by Fig. 1.

S207, counting the number of the characteristic elements of characters whose numerical values are the target values in the subtitle characteristic sequence. According to the example shown by the present embodiment, this step is required to count the number of the characteristic elements of characters whose numerical values are 1 in the subtitle characteristic sequence s(n).

S208, determining whether the number is within the fault tolerance range that is corresponding to the preset total number of sections; and if the judging result is yes, going to Step S210, and if the judging result is no, going to Step S209.

Assuming that M (M is a positive integer and M>1) is employed to express the preset total number of sections, the fault tolerance range that is corresponding to the preset total number of sections M may be expressed as [M-u, M+u] (u is an integer), wherein u represents an integer range and may be set based on actual requirements. This step is required to determine whether the number of the characteristic elements of characters whose numerical value are 1 in the subtitle characteristic sequence s(n) is within the range of [M-u, M+u]. If the judging result is yes, that indicates that the subtitle characteristic sequence s(n) can be divided into M of subtitle sections, to meet actual requirements of the section dividing of the target audio file. If the judging result is no, that indicates that the subtitle characteristic sequence s(n) cannot be well divided into M of subtitle sections, which cannot satisfy the actual requirements of the section dividing of the target audio file, and some adjustment is required.

S209, adjusting the value of the preset similarity threshold in order to adjust the numerical values of the characteristic element of characters in the subtitle characteristic sequence.

The adjusting process of this step may comprise the following Steps s21-s22:

s21, when the number is greater than the maximum fault tolerance value in the fault tolerance range that is corresponding to the preset total number of sections, increasing the preset similarity threshold according to the preset step length to adjust the numerical values of the characteristic element of characters in the subtitle characteristic sequence.

When the number is greater than M+u, it is required to increase the value of the preset similarity threshold Th according to the preset step length, and repeat Step s13 to adjust the numerical values of the characteristic element of characters in the subtitle characteristic sequence.

s22, when the number is less than the maximum fault tolerance value in the fault tolerance range that is corresponding to the preset total number of sections, decreasing the preset similarity threshold according to the preset step length to adjust the numerical values of the characteristic element of characters in the subtitle characteristic sequence.

When the number is less than M-u, it is required to decrease the value of the preset similarity threshold Th according to the preset step length, and repeat Step s13 to adjust the numerical values of the characteristic element of characters in the subtitle characteristic sequence.

In Steps s21-s22, the preset step length may be set based on actual requirements, wherein the preset step length may be a fixed step length, that is, the value of the preset similarity threshold Th is increased or decreased each time by a fixed step length; and the preset step length may also be random step lengths, that is, the value of the preset similarity threshold Th is increased or decreased each time by different step lengths.

Step S207 to Step S209 of the present embodiment may be the particular detailed steps of Step S103 of the embodiment shown by Fig. 1.

S210, acquiring the target indexes that are corresponding to the characteristic elements of characters whose numerical values are the target values from the subtitle characteristic sequence that has been optimized. Assuming that in the optimized subtitle characteristic sequence s(n), s(n)=0, s(1)=0...s(4)=1...s(10)=1...s(N-1)=0, because s(4)=1 and s(10)=1, the index that is corresponding to s(4) is 5, and the index that is corresponding to s(10) is 11, this step may obtain the target indexes of 5 and 11.

s211, locating the single sentence of characters at section break in the subtitle file according to the target index.

As the target indexes are 5 and 11, this step may locate the single sentence of characters at section breaks in the subtitle file to be the 5th single sentence of characters and the 11th single sentence of characters. That is, the 5th single sentence of characters is the starting point of the subtitle section, that is, the 1st to 4th single sentences of characters in the subtitle file constitute the subtitle section; and the 11th single sentence of characters is the starting point of another subtitle section, that is, the 5th to 10th single sentences of characters in the subtitle file constitute the subtitle section.

s212, reading the section breaking time from the subtitle file according to the single sentence of characters at section break.

Because the subtitle file records the time attributes of each single sentence of characters, including the starting time, the duration and the end time of each single sentence of characters, this step may read the section breaking time from the subtitle file. According to the example shown by the present embodiment, the 1st to 4th single sentences of characters in the subtitle file constitute the subtitle section, so the section breaking time can be read is at: the end time of the 4th single sentence of characters and the starting time of the 5th single sentence of characters; and the 5th to 10th single sentences of characters in the subtitle file constitute the subtitle section, so the section breaking time can be read is at: the end time of the 10th single sentence of characters and the starting time of the 11th single sentence of characters.

Step S210 to Step S212 of the present embodiment may be the particular detailed steps of Step S104 of the embodiment shown by Fig. 1. By Step S210 to Step S212, the starting times and the end times of M of subtitle sections can be obtained.

s213, dividing the target audio file into sections of the preset total number of sections according to the section breaking times. Because the audio file and the subtitle file correspond to each other, this step, according to the starting times and the end times of the obtained M of subtitle sections, can correspondingly divide the target audio file into sections, to obtain M of audio sections.

Step S213 of the present embodiment may refer to Step S105 of the embodiment shown by Fig. 1, and will not be described in details here.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of at least one characteristic element of characters in the subtitle characteristic sequence that has been optimized, and then divide the target audio file into sections of the preset total number of sections according to the section breaking times. The audio processing process realizes the section dividing of the target audio file, based on the similarity characteristic of the single sentence of characters between the subtitle sections in the subtitle file and improves the efficiency of section dividing processing and the intelligence of audio processing.

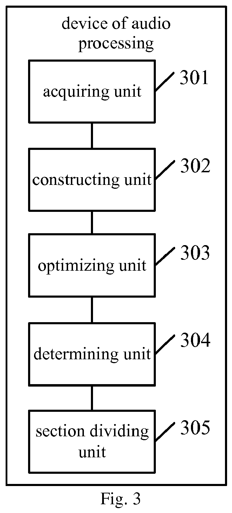

The structure and the function of a device of audio processing that is provided by the embodiments of the present disclosure will be described in details below with reference to Fig. 3 to Fig. 7. It should be noted that, the devices shown by Fig. 3 to Fig. 7 can operate in a terminal, in order to apply and execute the methods shown by Fig. 1 to Fig. 2.

Referring to Fig. 3, which is the schematic diagram of the structure of the device of audio processing that is provided by the embodiment of the present disclosure, the device may comprise: an acquiring unit 301, a constructing unit 302, an optimizing unit 303, a determining unit 304 and a section dividing unit 305.

The acquiring unit 301 is for acquiring the subtitle file that is corresponding to the target audio file, wherein the subtitle file consists of successively the at least one single sentence of characters.

One audio file corresponds to one subtitle file. In general, an Internet audio bank stores multiple audio files, the attributes of each audio file and the subtitle files that are corresponding to each audio file. In that, the attributes of the audio files may comprise, but are not limited to: the audio characteristics of the audio files, the identifications of the audio files, and so on. The acquiring unit 301 may acquire the subtitle file that is corresponding to the target audio file from the Internet audio bank, and the actual acquiring method may comprise, but is not limited to: according to the identification of the target audio file, looking up the subtitle file that is corresponding to the target audio file in the Internet audio bank, and acquiring the found subtitle file; or, extracting an audio characteristic of the target audio file, matching that with the audio characteristics of the audio files in the Internet audio bank, thereby locating the target audio file in the Internet audio bank, and acquiring the corresponding subtitle file.

In the embodiment of the present disclosure, assuming that the target audio file is the song A, and the structure of the subtitle file that is corresponding to the song A may refer to the example shown by the present embodiment, assuming that the subtitle file is formed by N (N is a positive integer) of character single sentences of characters successively, and assuming that the N of character single sentences of characters are expressed by p(0) to p(N-1), then, p(0) may be used for expressing the first single sentence of characters "a1a2a3a4a5a6a7a8", p(1) may be used for expressing the second single sentence of characters "b1b2b3b4b5b6b7b8", p(2) may be used for expressing the third single sentence of characters "c1c2c3c4c5c6c7c8", and, as the rest can be deduced accordingly, p(N-1) is used for expressing the Nth single sentence of characters.

The constructing unit 302 is for constructing the subtitle characteristic sequence according to the similarity degree between the at least one single sentence of characters, wherein the subtitle characteristic sequence comprises at least one characteristic element of characters.

The subtitle characteristic sequence may be used for reflecting the similarity degree the at least one character single sentence of characters. Firstly, the constructing unit 302 may calculate the similarity degree between the at least one single sentence of characters by using a similarity degree algorithm, wherein here it is required to calculate the similarity degree between each single sentence of characters and the single sentences of characters following it; that is, it is required to calculate the similarity degree between the p(0) and the p(1), the similarity degree between the p(0) and the p(2)...the similarity degree between the p(0) and the p(N-1); calculate the similarity degree between the p(1) and the p(2), the similarity degree between the p(1) and the p(3)...the similarity degree between the p(1) and the p(N-1); and the rest can be deduced accordingly. In that, the similarity degree algorithm may comprise, but is not limited to: Levenshtein Distance algorithm, Longest Common Subsequences (LCS) algorithm, Heckel algorithm, Greedy String Tiling (GS) algorithm, and so on. Secondly, the constructing unit 302 may construct the subtitle characteristic sequence according to the number, the order and the similarity degree that is obtained by calculating of the at least one single sentence of characters.

According to the example shown by the present embodiment, assuming that s(n) is employed to express the subtitle characteristic sequence, the constructed subtitle characteristic sequence s(n) comprises N of characteristic elements of character, which are s(0), s(1)...s(N-1). In that, the numerical value of the s(0) may be used for describing the similarity between the p(0) and the single sentence of characters following it, the numerical value of s(1) may be used for describing the similarity between the p(1) and the single sentence of characters following it, and the rest can be deduced accordingly.

The optimizing unit 303 is for optimizing the subtitle characteristic sequence according to the preset total number of sections.

The preset total number of sections may be set according to actual requirements on the section dividing of the target audio file by the user. Assuming that M (M is a positive integer and M>1) is employed to express the preset total number of sections, the objective for optimizing unit 303 to optimize the subtitle characteristic sequence s(n) according to the preset total number of sections M is: to exactly divide the subtitle characteristic sequence s(n) that has been optimized into M, the preset total number of sections, of subtitle sections, to meet actual requirements on the section dividing of the target audio file.

The determining unit 304 is for determining the section breaking times according to the numerical values of the at least one characteristic element of characters in the subtitle characteristic sequence that has been optimized.

In that, the subtitle characteristic sequence s(n) that has been optimized can be exactly divided into M, the preset total number of sections, of subtitle sections, and additionally, the numerical values of the characteristic element of characters in the subtitle characteristic sequence s(n) may be used for describing the similarity between the single sentences of characters. Accordingly, the determining unit 304, according to the numerical values of the characteristic element of characters in the subtitle characteristic sequence s(n) that has been optimized, can determine the break points of M of subtitle sections, and further can obtain the starting times and the end times of M of subtitle sections from the subtitle file.

The section dividing unit 305 is for dividing the target audio file into sections of the preset total number of sections according to the section breaking times.

Because the audio file and the subtitle file correspond to each other, the section dividing unit 305, according to the starting times and the end times of the obtained M of subtitle sections, can correspondingly divide the target audio file into sections, to obtain M of audio sections.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of the at least one characteristic element of characters in the subtitle characteristic sequence that has been optimized, and then divide the target audio file into sections of the preset total number of sections according to the section breaking times. The audio processing process realizes the section dividing of the target audio file, based on the similarity characteristic of the single sentence of characters between the subtitle sections in the subtitle file and improves the efficiency of section dividing processing and the intelligence of audio processing.

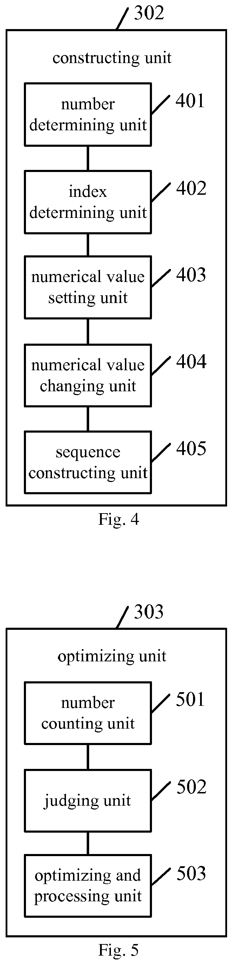

Referring to Fig. 4, which is the schematic diagram of the structure of the embodiment of the constructing unit shown by Fig. 3, the constructing unit 302 may comprise: a number determining unit 401, an index determining unit 402, a numerical value setting unit 403, a numerical value changing unit 404 and a sequence constructing unit 405.

The number determining unit 401 is for determining the number of the characteristic elements of characters that construct the subtitle characteristic sequence according to the number of the at least one single sentence of characters.

The subtitle file is formed by N (N is a positive integer) of single sentences of characters successively; that is, the number of the at least one single sentence of characters is N. Accordingly, the number determining unit 401 may determine that the number of the characteristic element of characters in the subtitle characteristic sequence is also N, that is, the length of the subtitle characteristic sequence is N. Assuming that s(n) is employed to express the subtitle characteristic sequence, the constructed subtitle characteristic sequence s(n) comprises N of characteristic elements of characters, which are s(0), s(1)...s(N-1).

The index determining unit 402 is for, according to the order of the single sentences of characters of the at least one single sentence of characters, determining the indexes of the characteristic elements of characters that construct the subtitle characteristic sequence.

The order of the N of single sentence of characters of the subtitle file is p(0), p(1)...p(N-1). Assuming that in the subtitle characteristic sequence s(n): s(0) corresponds to p(0), s(1) corresponds to p(1), and the rest can be deduced accordingly, s(N-1) corresponds to p(N-1), then, the index of s(0) in the subtitle characteristic sequence s(n) is 1, that is, the first characteristic element of characters; the index of s(1) is 2, that is, the second characteristic element of characters; and the rest can be deduced accordingly, the index of s(N-1) is N, that is, the Nth characteristic element of characters.

The numerical value setting unit 403 is for setting all the numerical values of the characteristic elements of characters that construct the subtitle characteristic sequence to the initial values.

The initial value may be set according to actual requirements, and in the present embodiment it may be assumed that the initial value is 0. Accordingly, the numerical value setting unit 403 may set the numerical values of all the characteristic elements of characters in the subtitle characteristic sequence s(n) to be 0, that is, s(0)=0, s(1)=0...s(N-1)=0.

The numerical value changing unit 404 is for, for any of the target single sentence of characters of the at least one single sentence of characters, if the maximum similarity degree between the target single sentence of characters and the single sentence of characters following it is greater than the preset similarity threshold, changing the numerical value of the characteristic element of characters that is corresponding to the target single sentence of characters from the initial value to the target value.

The particular process of the numerical value changing unit 404 may comprise the following A-C:

A. calculating the similarity degree between the at least one single sentence of characters by using a similarity degree algorithm, wherein here it is required to calculate the similarity degrees between each single sentences of characters and the single sentences of characters following it; that is, it is required to calculate the similarity degree between the p(0) and the p(1), the similarity degree between the p(0) and the p(2)...the similarity degree between the p(0) and the p(N-1); calculate the similarity degree between the p(1) and the p(2), the similarity degree between the p(1) and the p(3)...the similarity degree between the p(1) and the p(N-1); and the rest can be deduced accordingly. In that, the similarity degree algorithm may comprise, but is not limited to: Levenshtein Distance algorithm, Longest Common Subsequences (LCS) algorithm, Heckel algorithm, Greedy String Tiling (GS) algorithm, and so on. It should be noted that, in order to facilitate the calculating, the similarity degrees that are obtained by calculating are all normalized into the interval of [0, 1], wherein if the similarity degree between two single sentences of characters equals to 0, that indicates that the two single sentences of characters are totally different, and if the similarity degree between two single sentences of characters equals to 1, that indicates that the two single sentences of characters are totally the same.

B. extracting the maximum similarity degree between each single sentence of characters and the single sentences of characters following it. For example, assuming that, by calculating, between the p(0) and the single sentences of characters following it p(1) to p(N-1), the maximum similarity degree is between the p(0) and the p(2) and it is Q02, Q02 is extracted. As another example, assuming that, by calculating, between the p(1) and the single sentences of characters following it p(2) to p(N-1), the maximum similarity degree is between the p(1) and the p(5)and it is Q15, Q15 is extracted, and so on.

C. determining whether the extracted maximum similarity degrees are greater than the preset similarity threshold, and according to the judging result changing the numerical values of the corresponding characteristic elements of characters. In that, the preset similarity threshold may be set according to actual requirements, and the preset similarity threshold may be expressed by Th, wherein $0 \leq Th \leq 1$. The target value may be set according to actual requirements, and the target value is greater than the initial value. The present embodiment may set the target value to be 1. According to the examples shown by the present embodiment, for example, the present embodiment judges whether Q02 is greater than the preset similarity threshold Th, and if Q02 > Th, the present embodiment changes the numerical value of s(0) that is corresponding to p(0) to 1, that is, s(0)=1. As another example, the present embodiment judges whether Q15 is greater than the preset similarity threshold Th, and if Q15 > Th, the present embodiment changes the numerical value of s(1) that is corresponding to p(1) to 1, that is, s(1)=1, and so on.

The sequence constructing unit 405 is for, according to the numbers, the indexes and the numerical values of the characteristic elements of characters that construct the subtitle characteristic sequence, constructing the subtitle characteristic sequence.

The constructed subtitle characteristic sequence is s(n), wherein s(n) is formed by N of characteristic elements of characters s(0), s(1)...s(N-1) successively, and the numerical values of the characteristic elements of characters in the subtitle characteristic sequence s(n) form a sequence that is formed by 0 and 1.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of at least one characteristic element of characters in the subtitle characteristic sequence that has been optimized, and then divide the target audio file into sections of the preset total number of sections according to the section breaking times. The audio processing process realizes the section dividing of the target audio file based on the similarity characteristic of the single sentence of characters between the subtitle sections in the subtitle file and improves the efficiency of section dividing processing and the intelligence of audio processing.

Referring to Fig. 5, which is the schematic diagram of the structure of the embodiment of the optimizing unit shown by Fig. 3, the optimizing unit 303 may comprise: a number counting unit 501, a judging unit 502 and an optimizing and processing unit 503.

The number counting unit 501 is for counting the number of the characteristic elements of characters whose numerical values are the target values in the subtitle characteristic sequence. According to the example of the embodiment shown by Fig. 4, the number counting unit 501 is required to count the number of the characteristic elements of characters whose numerical values are 1 in the subtitle characteristic sequence s(n).

The judging unit 502 is for determining whether the number is within the fault tolerance range that is corresponding to the preset total number of sections.

Assuming that M (M is a positive integer and M>1) is employed to express the preset total number of sections, the fault tolerance range that is corresponding to the preset total number of sections M may be expressed as [M-u, M+u] (u is an integer), wherein u represents an integer range interval and may be set according to actual requirements. The judging unit 502 is required to determine whether the number of the characteristic elements of characters whose numerical value are 1 in the subtitle characteristic sequence s(n) is within the interval of [M-u, M+u]. If the judging result is yes, that indicates that the characteristic sequence of subtitles (n) can be divided into M, the preset total number of sections, of subtitle sections, to meet actual requirements on the section dividing of the target audio file. If the judging result is no, that indicates that the subtitle characteristic sequence s(n) cannot be well divided into M, the preset total number of sections, of subtitle sections, which cannot meet actual requirements on the section dividing of the target audio file, and needs some adjustment.

The optimizing and processing unit 503 is for, if the judging result is no, adjusting the value of the preset similarity threshold to adjust the numerical values of the characteristic elements of characters in the subtitle characteristic sequence.

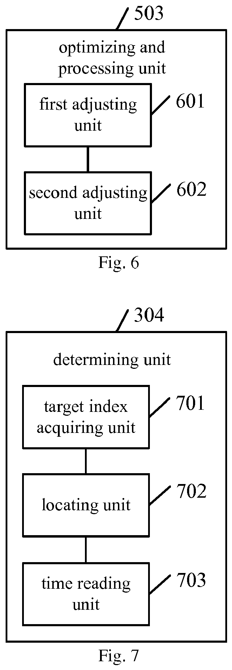

Additionally referring to Fig. 6, which is the schematic diagram of the structure of the embodiment of the optimizing and processing unit shown by Fig. 5, the optimizing and processing unit 503 comprises: the first adjusting unit 601 and the second adjusting unit 602.

The first adjusting unit 601 is for, when the number is greater than the maximum fault tolerance value in the fault tolerance range that is corresponding to the preset total number of sections, increasing the preset similarity threshold according to the preset step length to adjust the numerical values of the characteristic elements of character in the subtitle characteristic sequence.

When the number is greater than M+u, the first adjusting unit 601 is required to increase the value of the preset similarity threshold Th according to the preset step length, and readjust the numerical values of the characteristic elements of characters in the subtitle characteristic sequence.

The second adjusting unit 602 is for, when the number is less than the maximum fault tolerance value in the fault tolerance range that is corresponding to the preset total number of sections, decreasing the preset similarity threshold according to the preset step length to adjust the numerical values of the characteristic elements of characters in the subtitle characteristic sequence.

When the number is less than M-u, the second adjusting unit 602 is required to decrease the value of the preset similarity threshold Th according to the preset step length, and readjust the numerical values of the characteristic elements of characters in the subtitle characteristic sequence. In that, the preset step length may be set according to actual requirements, wherein the preset step length may be a fixed step length, that is, the value of the preset similarity threshold Th is increased or decreased each time by a fixed step length; and the preset step length may also be random step lengths, that is, the value of the preset similarity threshold Th is increased or decreased each time by different step lengths.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of the at least one characteristic element of characters in the subtitle characteristic sequence that has been optimized, and then divide the target audio file into sections of the preset total number of sections according to the section breaking times. The audio processing process realizes the section dividing of the target audio file based on the similarity characteristic of the single sentence of characters between the subtitle sections in the subtitle file and improves the efficiency of section dividing processing and the intelligence of audio processing.

Referring to Fig. 7, which is the schematic diagram of the structure of the embodiment of the determining unit 304 shown by Fig. 3, the determining unit 304 may comprise: a target index acquiring unit 701, a locating unit 702 and a time reading unit 703.

The target index acquiring unit 701 is for acquiring the target index that is corresponding to the characteristic elements of characters whose numerical values are the target values from the subtitle characteristic sequence that has been optimized.

Assuming that in the subtitle characteristic sequence s(n) that has been optimized, s(n)=0, s(1)=0...s(4)=1...s(10)=1...s(N-1)=0, because s(4)=1 and s(10)=1, the index that is corresponding to s(4) is 5, and the index that is corresponding to s(10) is 11, the target index acquiring unit 701 may obtain the target indexes of 5 and 11.

The locating unit 702 is for locating the single sentences of characters at the section breaks in the subtitle file according to the target index.

As the target indexes are 5 and 11, the locating unit 702 may locate the single sentences of characters at section breaks in the subtitle file to be the 5th single sentence of characters and the 11th single sentence of characters. That is, the 5th single sentence of characters is the starting location of the subtitle section, that is, the 1st to 4th single sentences of characters in the subtitle file constitute the subtitle section; and the 11th single sentence of characters is the starting location of another subtitle section, that is, the 5th to 10th single sentences of characters in the subtitle file constitute the subtitle section.

The time reading unit 703 is for reading the section breaking time from the subtitle file according to the single sentences of characters at section breaks.

Because the subtitle file records the time attributes of each single sentence of characters, including the starting time, the duration and the end time of each single sentence of characters, the time reading unit 703 may read the section breaking time from the subtitle file. According to the example shown by the present embodiment, the 1st to 4th single sentences of characters in the subtitle file constitute the subtitle section, so the section breaking time can be read is at: the end time of the 4th single sentence of characters and the starting time of the 5th single sentence of characters; and the 5th to 10th single sentences of characters in the subtitle file constitute the subtitle section, so the section breaking time can be read is at: the end time of the 10th single sentence of characters and the starting time of the 11th single sentence of characters.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of the at least one characteristic element of characters in the subtitle characteristic sequence that has been optimized, and then divide the target audio file into sections of the preset total number of sections according to the section breaking times. The audio processing process realizes the section dividing of the target audio file based on the similarity characteristic of the single sentence of characters between the subtitle sections in the subtitle file and improves the efficiency of section dividing processing and the intelligence of audio processing.

The embodiments of the present disclosure further disclose a terminal, wherein the terminal may be a PC (Personal Computer), a notebook computer, a mobile telephone, a PAD (tablet computer), a vehicle terminal, an intelligent wearable device and so on. The terminal may comprise a device of audio processing, and the structure and the function of the device can be seen in the relevant description on the above embodiments shown by Fig. 3 to Fig. 7 and will not be described in details here.

In the embodiment of the present disclosure, the present disclosure can construct the subtitle characteristic sequence according to the similarity degree between the at least one single sentence of characters in the subtitle file that is corresponding to the target audio file, optimize the subtitle characteristic sequence according to the preset total number of sections, determine the section breaking times according to the numerical values of the at least one characteristic element of characters in the subtitle characteristic sequence that has been optimized, and then divide the target audio file into sections of the preset total number of sections according to the section breaking times. The audio processing process realizes the section dividing of the target audio file based on the similarity characteristic of the single sentences of characters between the subtitle sections in the subtitle file and improves the efficiency of section dividing processing and the intelligence of audio processing.

A person skilled in the art can understand that, all or part of the steps of the above embodiments may be implemented by hardware, and may also be implemented by a program that instructs relevant hardware. The program may be stored in a computer readable storage medium. The storage medium may be a read-only memory, a magnetic disc, an optical disk and so on.

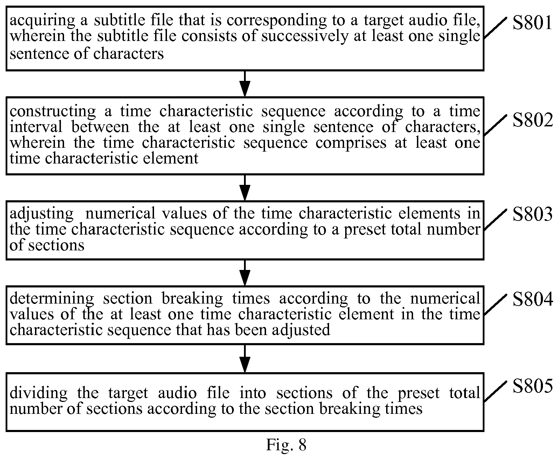

Based on the above description, the method of audio processing that is provided by the embodiments of the present disclosure will be in detail described below with reference to Fig. 8 to Fig. 9.

Referring to Fig. 8, which is the flow chart of the method of audio processing that is provided by the embodiment of the present disclosure, the method may comprise the following Step S801 to Step S805.

S801, acquiring the subtitle file that is corresponding to the target audio file, wherein the subtitle file consists of successively the at least one single sentence of characters.

One audio file corresponds to one subtitle file. The subtitle file comprises at least one single sentence of characters and key information of the single sentences of characters, wherein the key information of one single sentence of characters comprises: the identification (ID), the starting time (start_time) and the end time (end_time). In general, an Internet audio bank stores multiple audio files, the attributes of each audio file and the subtitle files that are corresponding to each audio file. In that, the attributes of the audio files may comprise, but are not limited to: the audio characteristics of the audio files, the identifications of the audio files, and so on. This step may acquire the subtitle file that is corresponding to the target audio file from the Internet audio bank, and the actual acquiring method may comprise, but is not limited to: according to the identification of the target audio file, looking up the subtitle file that is corresponding to the target audio file in the Internet audio bank, and acquiring the found subtitle file; or, extracting an audio characteristic of the target audio file, matching that with the audio characteristics of the audio files in the Internet audio bank, thereby locating the target audio file in the Internet audio bank, and acquiring the corresponding subtitle file.

In the embodiment of the present disclosure, assuming that the target audio file is the song A, and the structure of the subtitle file that is corresponding to the song A may refer to the example shown by the present embodiment, assuming that the subtitle file is formed by N (N is a positive integer) of single sentences of characters successively, and assuming that the N of single sentences of characters are expressed by $p(0)$ to $p(N-1)$, then, $p(0)$ may be used for expressing the first single sentence of characters "a1a2a3a4a5a6a7a8", $p(1)$ may be used for expressing the second single sentence of characters "b1b2b3b4b5b6b7b8", $p(2)$ may be used for expressing the third single sentence of characters "c1c2c3c4c5c6c7c8", and, as the rest can be deduced accordingly, $p(N-1)$ is used for expressing the Nth single sentence of characters.

S802, constructing the time characteristic sequence according to the time interval between the at least one single sentence of characters, wherein the time characteristic sequence comprises at least one time characteristic element.

The time characteristic sequence may be used for reflecting the degree of the time interval between the at least one single sentence of characters. This step firstly calculates the time interval between the at least one single sentence of characters, wherein here it is required to calculate the time interval between the $p(1)$ and the $p(0)$ the $p(1).\text{start\_time}-p(0).\text{end\_time}$; calculate the time interval between the $p(2)$ and the $p(1)$ the $p(2).\text{start\_time}-p(1).\text{end\_time}$; and, as the rest can be deduced accordingly, calculate the time interval between the $p(N-1)$ and the $p(N-2)$ $p(N-1).\text{start\_time}-p(N-2).\text{end\_time}$. Secondly, this step may construct the time characteristic sequence according to the number, the order and the time interval that is obtained by calculating of the at least one single sentence of characters.

According to the example shown by the present embodiment, assuming that t(n) is employed to express the time characteristic sequence, the constructed time characteristic sequence t(n) comprises N of time characteristic elements, which are t(0), t(1)...t(N-1). In that, the numerical value of t(0) may be set to be 0, and the numerical value of t(1) is used for expressing the time interval between the p(1) and the p(0); the numerical value of t(2) is used for expressing the time interval between the p(2) and the p(1); and, as the rest can be deduced accordingly, the numerical value of t(N-1) is used for expressing the time interval between the p(N-1) and the p(N-2).

S803, adjusting the numerical values of the time characteristic elements in the time characteristic sequence according to the preset total number of sections.

The preset total number of sections may be set according to actual requirements on the section dividing of the target audio file by the user. Assuming that M (M is a positive integer and M>1) is employed to express the preset total number of sections, the objective of adjusting the numerical values of the time characteristic elements in the time characteristic sequence t(n) according to the preset total number of sections M is: to enable the time characteristic sequence t(n) that has been adjusted to be exactly enable to extract the breaking points that are corresponding to M of subtitle sections, thereby meeting actual requirements on the section dividing of the target audio file.

S804, determining the section breaking times according to the numerical values of the at least one time characteristic element in the time characteristic sequence that has been adjusted.

Assuming the numerical values of the time characteristic elements in the time characteristic sequence t(n) that has been adjusted can reflect the breaking points that are corresponding to M of subtitle sections, this step may, according to the numerical values of the at least one time characteristic element in the time characteristic sequence that has been adjusted, obtain the starting times and the end times of M of subtitle sections from the subtitle file.

S805, dividing the target audio file into sections of the preset total number of sections according to the section breaking times. Because the audio file and the subtitle file correspond to each other, this step, according to the starting times and the end times of the obtained M of subtitle sections, can correspondingly divide the target audio file into sections, to obtain M of audio sections.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

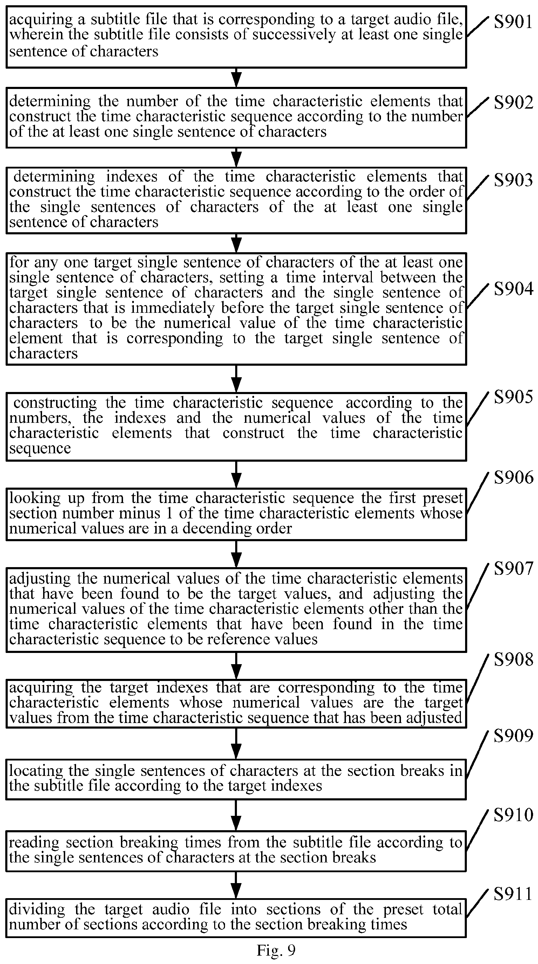

Referring to Fig. 9, which is the flow chart of another method of audio processing that is provided by the embodiment of the present disclosure, the method may comprise the following Step S901 to Step S905.

S901, acquiring the subtitle file that is corresponding to the target audio file, wherein the subtitle file consists of successively the at least one single sentence of characters.

In the embodiment of the present disclosure, assuming that the target audio file is the song A, and the structure of the subtitle file that is corresponding to the song A may refer to the example shown by the present embodiment, assuming that the subtitle file is formed by N (N is a positive integer) of single sentences of characters successively, and assuming that the N of single sentences of characters are expressed by p(0) to p(N-1), then, p(0) may be used for expressing the first single sentence of characters "ala2a3a4a5a6a7a8", p(1) may be used for expressing the second single sentence of characters "blb2b3b4b5b6b7b8", p(2) may be used for expressing the third single sentence of characters "clc2c3c4c5c6c7c8", and, as the rest can be deduced accordingly, p(N-1) is used for expressing the Nth single sentence of characters.

Step S901 of the present embodiment may refer to Step S801 of the embodiment shown by Fig. 1, and will not be described in details here.

S902, determining the number of the time characteristic elements that construct the time characteristic sequence according to the number of the at least one single sentence of characters.

Assuming the subtitle file is formed by N (N is a positive integer) of single sentences of characters successively; that is, the number of the at least one single sentence of characters is N. This step may determine that the number of the time characteristic elements of the time characteristic sequence is also N, that is, the length of the time characteristic sequence is N. Assuming that (n) is employed to express the time characteristic sequence, the constructed time characteristic sequence t(n) comprises N of time characteristic elements, which are t(0), t(1)...t(N-1).

S903, according to the order of the single sentences of characters of the at least one single sentence of characters, determining the indexes of the time characteristic elements that construct the time characteristic sequence.

The order of the N of single sentences of characters of the subtitle file is p(0), p(0)...p(N-1). Assuming that in the time characteristic sequence t(n): t(0) corresponds to p(0), t(1) corresponds to p(1), and, as the rest can be deduced accordingly, t(N-1) corresponds to p(N-1), the index of t(0) in the time characteristic sequence t(n) is 1, that is, the first time characteristic element; the index of t(1) is 2, that is, the second time characteristic element; and, as the rest can be deduced accordingly, the index of t(N-1) is N, that is, the Nth time characteristic element.

S904, for any target single sentence of characters of the at least one single sentence of characters, setting the time interval between the target single sentence of characters and the single sentence of characters that is immediately before it to be the numerical value of the time characteristic element that is corresponding to the target single sentence of characters.

The particular process of this step S904 may comprise the following Steps s11-s12:

S11, calculating the time interval between each single sentence of characters and the neighboring single sentence of characters before it, wherein here it is required to calculate the time interval between the p(1) and the p(0) p(1).start_time-p(0).end_time; calculate the time interval between the p(2) and the p(1) p(2).start_time-p(1).end_time;and, as the rest can be deduced accordingly, calculate the time interval between the p(N-1) and the p(N-2) p(N-1).start_time-p(N-2).end_time.

S12, setting the time intervals that are obtained by calculating to be the numerical values of the corresponding time characteristic elements, wherein it may be set that t(0)=0, t(1)=p(1).start_time-p(0).end_time, t(2)=p(2).start_time-p(1).end_time, and, as the rest can be deduced accordingly, t(N-1)=p(N-1).start_time-p(N-2).end_time.

S905, according to the numbers, the indexes and the numerical values of the time characteristic elements that construct the time characteristic sequence, constructing the time characteristic sequence.

The constructed time characteristic sequence is t(n), wherein t(n) is formed by N of time characteristic elements t(0), t(1)...t(N-1) successively, and the numerical values of the time characteristic elements in the time characteristic sequence t(n) are t(0)=0, t(1)=p(1).start_time-p(0).end_time, t(2)=p(2).start_time-p(1).end_time, and, as the rest can be deduced accordingly, t(N-1)=p(N-1).start_time-p(N-2).end_time.

Step S902 to Step S905 of the present embodiment may be the particular detailed steps of Step S802 of the embodiment shown by Fig. 8.

S906, looking up from the time characteristic sequence for the first preset number of sections minus 1 of time characteristic elements whose numerical values are in descending order. Assuming that M (M is a positive integer and M>1) is employed to express the preset total number of sections, this step is required to look up from the time characteristic sequence t(n) for the first M-1 of time characteristic elements whose numerical values are in descending order.

S907, adjusting the numerical values of the time characteristic elements that have been identified to be the target value, and adjusting the numerical values of the time characteristic elements other than the time characteristic elements that have been identified in the time characteristic sequence to be the reference values. The target value and the characteristic value may be set according to actual requirements. The embodiment of the present disclosure may set the target value to be 1 and the reference value to be 0.

The particular process of Steps S906-S907 may be: firstly going through the numerical values of the time characteristic elements in the time characteristic sequence t(n), and identifying the time characteristic element that is corresponding to the maximum numerical value; then excluding the identified time characteristic element, again going through the remaining numerical values of the time characteristic elements in the time characteristic sequence t(n), and identifying the time characteristic element that is corresponding to the maximum numerical value; repeating the above process, till M-1 of maximum numerical values are identified; and finally adjusting all of the M-1 of maximum numerical values that have been identified from the time characteristic sequence t(n) to be 1, and adjusting the other numerical values to be 0.

Step S906 to Step S907 of the present embodiment may be the particular detailed steps of Step S803 of the embodiment shown by Fig. 8. Because M of subtitle sections exactly correspond to M-1 of section breaking points, by Step S906 to Step S907, the time characteristic sequence t(n) that has been adjusted can exactly extract M-1 of section breaking points that are corresponding to M of subtitle sections, thereby meeting the actual requirements of the section dividing of the target audio file.

S908, acquiring the target index that is corresponding to the time characteristic elements whose numerical values are the target values from the time characteristic sequence that has been adjusted. This step is required to acquire the target index that is corresponding to the time characteristic element whose numerical value is 1, that is, is required to acquire the index of the M-1 of time characteristic elements that have been identified.

S909, locating the single sentences of characters at the section breaks in the subtitle file according to the target index.

Assuming that one of the target indexes is 5, this step may locate the single sentence of characters at the section break in the subtitle file to be the 5th single sentence of characters. That is, the 5th single sentence of characters is the starting location of the subtitle section, that is, the 1st to 4th single sentences of characters in the subtitle file constitute the subtitle section. In a similar way, the single sentences of characters of M-1 of the section breaks can be located.

S910, reading the section breaking time from the subtitle file according to the single sentences of characters at the section breaks.

The subtitle file records the key information of each single sentence of characters, including the starting time and the end time of each single sentence of characters. This step may read the section breaking times from the subtitle file. According to the example shown by the present embodiment, the 1st to 4th single sentences of characters in the subtitle file constitute the subtitle section, so the section breaking times can be read are: the end time of the 4th single sentence of characters and the starting time of the 5th single sentence of characters.

Step S908 to Step S910 of the present embodiment may be the particular detailed steps of Step S804 of the embodiment shown by Fig. 8. By Step S908 to Step S910, the starting times and the end times of M of subtitle sections can be obtained.

S911, dividing the target audio file into sections of the preset total number of sections according to the section breaking times. Because the audio file and the subtitle file correspond to each other, this step, according to the starting times and the end times of the obtained M of subtitle sections, can correspondingly divide the target audio file into sections, to obtain M of audio sections.

Step S911 of the present embodiment may refer to Step S805 of the embodiment shown by Fig. 8, and will not be described in details here.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

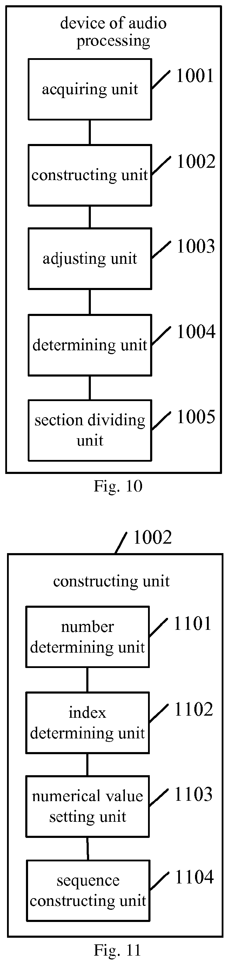

The structure and the function of a device of audio processing that is provided by the embodiments of the present disclosure will be described in details below with reference to Fig. 10 to Fig. 13. It should be noted that, the devices shown by Fig. 10 to Fig. 13 can operate in a terminal, in order to be applied to execute the methods shown by Fig. 8 to Fig. 9.

Referring to Fig. 10, which is the schematic diagram of the structure of a device of audio processing that is provided by the embodiment of the present disclosure, the device may comprise: an acquiring unit 1001, a constructing unit 1002, an adjusting unit 1003, a determining unit 1004 and a section dividing unit 1005.

The acquiring unit 1001 is for acquiring the subtitle file that is corresponding to the target audio file, wherein the subtitle file consists of successively the at least one single sentence of characters.

One audio file corresponds to one subtitle file. The subtitle file comprises at least one single sentence of characters and key information of the single sentences of characters, wherein the key information of one single sentence of characters comprises: the identification (ID), the starting time (start_time) and the end time (end_time). In general, an Internet audio bank stores multiple audio files, the attributes of each audio file and the subtitle files that are corresponding to each audio file. In that, the attributes of the audio files may comprise, but are not limited to: the audio characteristics of the audio files, the identifications of the audio files, and so on. The acquiring unit 1001 may acquire the subtitle file that is corresponding to the target audio file from the Internet audio bank, and the actual acquiring method may comprise, but is not limited to: according to the identification of the target audio file, looking up the subtitle file that is corresponding to the target audio file in the Internet audio bank, and acquiring the found subtitle file; or, extracting an audio characteristic of the target audio file, matching that with the audio characteristics of the audio files in the Internet audio bank, thereby locating the target audio file in the Internet audio bank, and acquiring the corresponding subtitle file.

In the embodiment of the present disclosure, assuming that the target audio file is the song A, and the structure of the subtitle file that is corresponding to the song A may refer to the example shown by the present embodiment, assuming that the subtitle file is formed by N (N is a positive integer) of single sentences of characters successively, and assuming that the N of single sentences of characters are expressed by p(0) to p(N-1), then, p(0) may be used for expressing the first single sentence of characters "a1a2a3a4a5a6a7a8", p(1) may be used for expressing the second single sentence of characters "b1b2b3b4b5b6b7b8", p(2) may be used for expressing the third single sentence of characters "c1c2c3c4c5c6c7c8", and, as the rest can be deduced accordingly, p(N-1) is used for expressing the Nth single sentence of characters.

The constructing unit 1002 is for constructing the time characteristic sequence according to the time interval between the at least one single sentence of characters, wherein the time characteristic sequence comprises at least one time characteristic element.

The time characteristic sequence may be used for reflecting the degree of the time interval between the at least one single sentence of characters. Firstly, the constructing unit 1002 calculates the time interval between the at least one single sentence of characters, wherein here it is required to calculate the time interval between the p(1) and the p(0) p(1).start_time-p(0).end_time; calculate the time interval between the p(2) and the p(1) p(2).start_time-p(1).end_time; and, as the rest can be deduced accordingly, calculate the time interval between the p(N-1) and the p(N-2) p(N-1).start_time-p(N-2).end_time. Secondly, the constructing unit 1002 may construct the time characteristic sequence according to the number, the order and the time interval that is obtained by calculating of the at least one single sentence of characters.

According to the example shown by the present embodiment, assuming that t(n) is employed to express the time characteristic sequence, the constructed time characteristic sequence t(n) comprises N of time characteristic elements, which are t(0), t(1)...t(N-1). In that, the numerical value of t(0) may be set to be 0, and the numerical value of t(1) is used for expressing the time interval between the p(1) and the p(0); the numerical value of t(2) is used for expressing the time interval between the p(2) and the p(1); and, as the rest can be deduced accordingly, the numerical value of t(N-1) is used for expressing the time interval between the p(N-1) and the p(N-2).

The adjusting unit 1003 is for adjusting the numerical values of the time characteristic elements in the time characteristic sequence according to the preset total number of sections.

The preset total number of sections may be set according to actual requirements on the section dividing of the target audio file by the user. Assuming that M (M is a positive integer and M>1) is employed to express the preset total number of sections, the objective of adjusting the numerical values of the time characteristic elements in the time characteristic sequence t(n) according to the preset total number of sections M by the adjusting unit 1003 is: to allow extracting from the time characteristic sequence t(n) that has been adjusted exactly M of breaking points that are corresponding to subtitle sections, thereby meeting the actual requirements of the section dividing of the target audio file.

The determining unit 1004 is for determining the section breaking times according to the numerical values of the at least one time characteristic element in the time characteristic sequence that has been adjusted.

The numerical values of the time characteristic elements in the time characteristic sequence t(n) that has been adjusted can reflect the breaking points that are corresponding to M of subtitle sections, and accordingly, the determining unit 1004 may, according to the numerical values of the at least one time characteristic element in the time characteristic sequence that has been adjusted, obtain the starting times and the end times of M of subtitle sections from the subtitle file.

The section dividing unit 1005 is for dividing the target audio file into sections of the preset total number of sections according to the section breaking times.

Because the audio file and the subtitle file correspond to each other, the section dividing unit 1005, according to the starting times and the end times of the obtained M of subtitle sections, can correspondingly divide the target audio file into sections, to obtain M of audio sections.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

Referring to Fig. 11, which is the schematic diagram of the structure of the embodiment of the constructing unit shown by Fig. 10, the constructing unit 1002 may comprise: a number determining unit 1101, an index determining unit 1102, a numerical value setting unit 1103 and a sequence constructing unit 1104.

The number determining unit 1101 is for determining the number of the time characteristic elements that construct the time characteristic sequence according to the number of the at least one single sentence of characters.

The subtitle file is formed by N (N is a positive integer) of single sentences of characters successively; that is, the number of the at least one single sentence of characters is N. Accordingly, the number determining unit 1101 may determine that the number of the time characteristic elements of the time characteristic sequence is also N, that is, the length of the time characteristic sequence is N. Assuming that t(n) is employed to express the time characteristic sequence, the constructed time characteristic sequence t(n) comprises N of time characteristic elements, which are t(0), t(1)...t(N-1).

The index determining unit 1102 is for, according to the order of the single sentences of characters of the at least one single sentence of characters, determining the indexes of the time characteristic elements that construct the time characteristic sequence.

The order of the N of single sentences of characters of the subtitle file is p(0), p(0)...p(N-1). Assuming that in the time characteristic sequence t(n): t(0) corresponds to p(0), t(1) corresponds to p(1), and, as the rest can be deduced accordingly, t(N-1) corresponds to p(N-1), the index of t(0) in the time characteristic sequence t(n) is 1, that is, the first time characteristic element; the index of t(1) is 2, that is, the second time characteristic element; and, as the rest can be deduced accordingly, the index of t(N-1) is N, that is, the Nth time characteristic element.

The numerical value setting unit 1103 is for setting the time interval between the target single sentence of characters and the single sentence of characters that is immediately before the target single sentence of characters to be the numerical value of the time characteristic element that is corresponding to the target single sentence of characters, for any one target single sentence of characters of the at least one single sentence of characters.

The particular process of the numerical value setting unit 1103 may comprise the following A-B:

A. calculating the time interval between each single sentence of characters and the neighboring single sentence of characters before it, wherein here it is required to calculate the time interval between the p(1) and the p(0) p(1).start_time-p(0).end_time; calculate the time interval between the p(2) and the p(1) p(2).start_time-p(1).end_time; and, as the rest can be deduced accordingly, calculate the time interval between the p(N-1) and the p(N-2) p(N-1).start_time-p(N-2).end_time.

B. setting the time intervals that are obtained by calculating to be the numerical values of the corresponding time characteristic elements, wherein it may be set that t(0)=0, t(1)=p(1).start_time-p(0).end_time, t(2)=p(2).start_time-p(1).end_time, and, as the rest can be deduced accordingly, t(N-1)=p(N-1). start_time-p(N-2).end_time.

The sequence constructing unit 1104 is for constructing the time characteristic sequence, according to the numbers, the indexes and the numerical values of the time characteristic elements that construct the time characteristic sequence.

The constructed time characteristic sequence is t(n), wherein t(n) is formed by N of time characteristic elements t(0), t(1)...t(N-1) successively, and the numerical values of the time characteristic elements in the time characteristic sequence t(n) are t(0)=0, t(1)=p(1).start_time-p(0).end_time, t(2)=p(2).start_time-p(1).end_time, and, as the rest can be deduced accordingly, t(N-1)=p(N-1).start_time-p(N-2).end_time.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

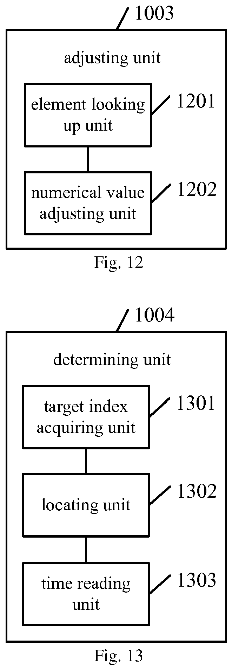

Referring to Fig. 12, which is the schematic diagram of the structure of the embodiment of the adjusting unit shown by Fig. 10, the adjusting unit 1003 may comprise: an element looking up unit 1201 and a numerical value adjusting unit 1202.

The element looking up unit 1201 is for looking up the time characteristic elements whose numerical values are of the first preset section number minus 1 values in descending order, from the time characteristic sequence.

Assuming that M (M is a positive integer and M>1) is employed to express the preset total number of sections, the element looking up unit 1201 is required to look up time characteristic elements of whose numerical values are of the first M-1 of values in descending order, from the time characteristic sequence t(n).

The numerical value adjusting unit 1202 is for adjusting the numerical value of the time characteristic elements that have been found to be the target value, and adjusting the numerical values of the time characteristic elements other than the time characteristic elements that have been found in the time characteristic sequence to be reference values. The target value and the characteristic value may be set according to actual requirements. The embodiment of the present invention may set the target value to be 1 and the reference value to be 0.

The particular process of the element looking up unit 1201 and the numerical value adjusting unit 1202 may be: firstly the element looking up unit 1201 going through the numerical values of the time characteristic elements in the time characteristic sequence t(n), and identifying from them the time characteristic element that is corresponding to the maximum numerical value; after excluding the time characteristic element that has been identified, again going through the remaining numerical values of the time characteristic elements in the time characteristic sequence t(n), and identifying from them the time characteristic element that is corresponding to the maximum numerical value; repeating the above process, till M-1 of maximum numerical values are identified; and finally the numerical value adjusting unit 1202 adjusting all of the M-1 of maximum numerical values that have been identified from the time characteristic sequence t(n) to be 1, and adjusting the other numerical values to be 0.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

Referring to Fig. 13, which is the schematic diagram of the structure of the embodiment of the determining unit shown by Fig. 10, the determining unit 1004 may comprise: a target index acquiring unit 1301, a locating unit 1302 and a time reading unit 1303.

The target index acquiring unit 1301 is for acquiring a target index that is corresponding to the time characteristic elements whose numerical values are the target values from the time characteristic sequence that has been adjusted.

According to the example of the embodiment shown by Fig. 5, the target index acquiring unit 1301 is required to acquire the target index that is corresponding to the time characteristic element whose numerical value is 1, that is, is required to acquire the index of the M-1 of time characteristic elements that have been identified.

The locating unit 1302 is for locating the single sentences of characters at the section breaks in the subtitle file according to the target index.

Assuming that one of the target indexes is 5, the locating unit 1302 may locate the single sentences of characters at the section breaks in the subtitle file to be the 5th single sentence of characters. That is, the 5th single sentence of characters is the starting location of the subtitle section, that is, the 1st to 4th single sentences of characters in the subtitle file constitute the subtitle section. In a similar way, the single sentences of characters of M-1 of the section breaks can be located.

The time reading unit 1303 is for reading the section breaking times from the subtitle file according to the single sentences of characters at the section breaks.

Because the subtitle file records the key information of each single sentences of characters, including the starting time and the end time of each single sentences of characters, the time reading unit 1303 may read the section breaking times from the subtitle file. According to the example shown by the present embodiment, the 1st to 4th single sentences of characters in the subtitle file constitute the subtitle section, so the section breaking time can be read is at: the end time of the 4th single sentence of characters and the starting time of the 5th single sentence of characters.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

The embodiments of the present disclosure further discloses a terminal, wherein the terminal may be a PC (Personal Computer), a notebook computer, a mobile telephone, a PAD (tablet computer), a vehicle terminal, an intelligent wearable device and so on. The terminal may comprise a device of audio processing, and the structure and the function of the device can be seen in the relevant description on the above embodiments shown by Fig. 10 to Fig. 13 and will not be described in details here.

In the embodiment of the present disclosure, the present disclosure can construct the time characteristic sequence according to the time interval between the at least one single sentence of characters in the subtitle file that is corresponding to the target audio file, adjust the numerical values of the time characteristic elements in the time characteristic sequence according to the preset total number of sections, determine the section breaking times according to the numerical values of the at least one time characteristic element in the time characteristic sequence that has been adjusted, and then divide the target audio file into sections of the preset total number of sections according to the section breaking times. The audio processing process realizes the section dividing of the target audio file, based on the time interval characteristic of the single sentences of characters between the subtitle sections in the subtitle file, and improves the efficiency of section dividing processing and the intelligence of audio processing.

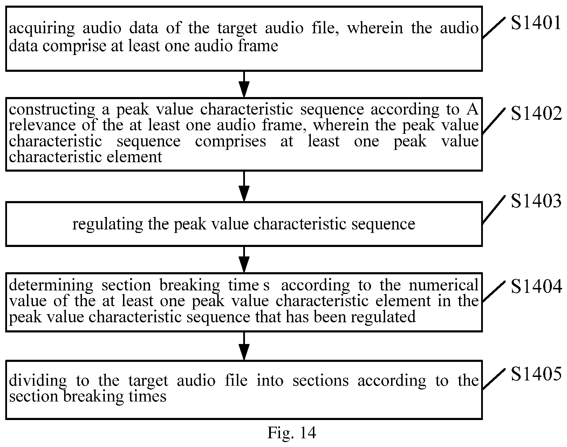

Based on the above description, the method of audio processing that is provided by the embodiments of the present disclosure will be in detail described below with reference to Fig. 14 to Fig. 15.

Referring to Fig. 14, which is the flow chart of the method of audio processing that is provided by the embodiment of the present disclosure, the method may comprise the following Step S1401 to Step S1405.

S1401, acquiring audio data of the target audio file, wherein the audio data comprise the at least one audio frame.

An audio file comprises audio data, and decoding the audio file (for example, PCM decoding) can obtain the audio data (for example, PCM data). This step may decode the target audio file, to obtain the audio data of the target audio file. The audio data may comprise the at least one audio frame, and the audio data may be expressed as the frame sequence that is formed by successively the at least one audio frame.

In the embodiment of the present disclosure, it is set that the audio data comprise N of audio frames, wherein the N is a positive integer, that is, N is the sampling point number of the audio data, and the audio data may be expressed as x(n), wherein n is a positive integer and n=0, 1, 2, N-1.

S1402, constructing the peak value characteristic sequence according to the relevance of the at least one audio frame, wherein the peak value characteristic sequence comprises at least one peak value characteristic element.

The peak value characteristic sequence may be used for reflecting the similarity of the at least one audio frame. This step may firstly employ the relevance calculation formula to calculate the relevance of the at least one audio frame, wherein here the relevance function sequence of the at least one audio frame can be obtained by calculating. Assuming that r() is employed to express the relevance function, by relevance calculation r(n), r(n+1), r(n+2)...r(N-2), r(N-1)can be obtained. Secondly, this step may analyze the maximum value and the peak value of the relevance function sequence of the at least one audio frame, to construct the peak value characteristic sequence.

In the embodiment of the present invention, assuming that v(n) is employed to express the peak value characteristic sequence, the constructed peak value characteristic sequence v(n) comprises N of wave peak characteristic elements, which are v(0), v(1)...v(N-1). In that, the numerical value of the v(0) may be used for describing the relevance between the audio frame x(0) and the audio frame following it, the numerical value of the v(1) may be used for describing the relevance between the x(1) and the audio frame following it, and the rest can be deduced accordingly.

S1403, regulating the peak value characteristic sequence.

This step may regulate the peak value characteristic sequence v(n) by using the scanning interval that is corresponding to the preset interval coefficient. The objective of the regulating is: to make the peak value characteristic sequence v(n) to have only one maximum peak value within the scanning interval that is corresponding to the preset interval coefficient, to ensure the accuracy of the subsequent section dividing.

S1404, determining the section breaking times according to the numerical value of the at least one peak value characteristic element in the peak value characteristic sequence that has been regulated.

The numerical values of the peak value characteristic elements in the peak value characteristic sequence v(n) that has been regulated may be used for describing the relevance between the audio frames, and accordingly, this step may determine the audio section breaking times according to the numerical value of the at least one peak value characteristic element in the peak value characteristic sequence that has been regulated.

S1405, dividing the target audio file into sections according to the section breaking times. According to the obtained audio section breaking times, the method can divide the target audio file into sections.

In the embodiment of the present disclosure, the present disclosure can construct the peak value characteristic sequence according to the relevance of the at least one audio frame that the audio data of the target audio file comprise, regulate the peak value characteristic sequence, determine the section breaking times according to the numerical values of the at least one peak value characteristic element in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

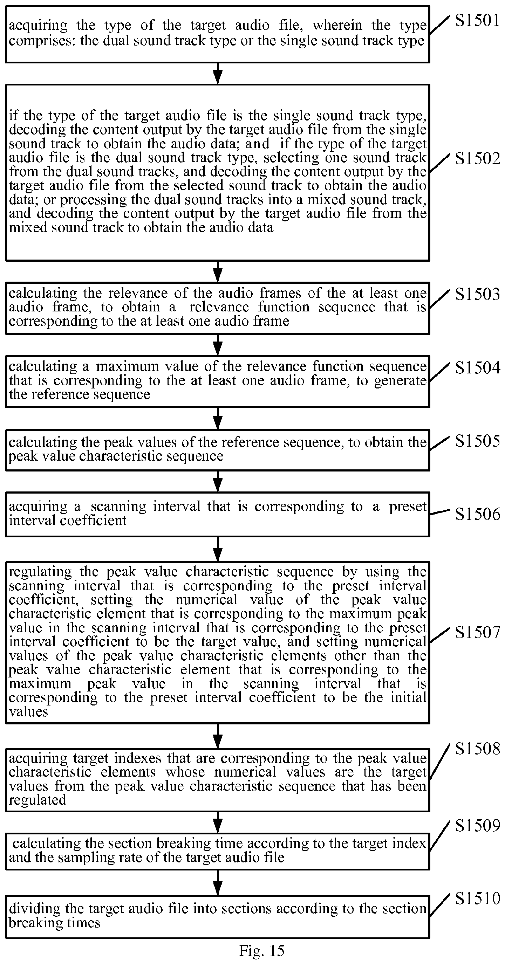

Referring to Fig. 15, which is the flow chart of another method of audio processing that is provided by the embodiment of the present disclosure, the method may comprise the following Step S1501 to Step S1510.

S1501, acquiring the type of the target audio file, wherein the type comprises: the dual sound track type or the single sound track type.

In general, an Internet audio bank stores multiple audio files and the attributes of each audio file. In that, the attributes of the audio files may comprise, but are not limited to: the audio characteristics of the audio files, the identifications of the audio files, the types of the audio files, and so on. This step may acquire the type of the target audio file from the Internet audio bank, and the actual acquiring method may comprise, but is not limited to: according to the identification of the target audio file, looking up the type of the target audio file in the Internet audio bank; or, extracting an audio characteristic of the target audio file, matching that with the audio characteristics of the audio files in the Internet audio bank, thereby locating the target audio file in the Internet audio bank, and acquiring the type of the target audio file.

S1502, if the type of the target audio file is the single sound track type, decoding the content output by the target audio file from the single sound track to obtain the audio data; or, if the type of the target audio file is the dual sound track type, selecting one sound track from the dual sound tracks, and decoding the content output by the target audio file from the selected sound track to obtain the audio data; or processing the dual sound tracks into a mixed sound track, and decoding the content output by the target audio file from the mixed sound track to obtain the audio data.

In that, if the type of the target audio file is the single sound track type, the target audio file outputs the audio content from one sound track, and this step is required to decode the audio content output from the single sound track to obtain the audio data. If the type of the target audio file is the dual sound track type, the target audio file outputs the audio content from two sound tracks, and this step may decode the audio content output from one of the sound tracks to obtain the audio data. In addition, this step may also firstly employ processing modes such as Downmix to process the two sound tracks into a mixed sound track, and then decode the audio content output from the mixed sound track to obtain the audio data.

In the embodiment of the present disclosure, it is set that the audio data comprise N of audio frames, wherein the N is a positive integer, that is, N is the sampling point number of the audio data, and the audio data may be expressed as x(n), wherein n is a positive integer and n=0, 1, 2, N-1.

Step S1501 to Step S1502 of the present embodiment may be the particular detailed steps of Step S1401 of the embodiment shown by Fig. 14.

S1503, calculating the relevance of the audio frames of the at least one audio frame, to obtain a relevance function sequence that is corresponding to the at least one audio frame.

The method may employ a relevance calculation formula to calculate the relevance of the at least one audio frame, wherein the relevance calculation formula may be expressed as follows:

$$r(n+i) = \frac{\sum_{m=0}^{L} x(n+m)x(n+i+m)}{L * M * M}$$

(1)

In the above formula, i is an integer and $0 \leq i \leq N-1$; m is an integer and $0 \leq i \leq L$; L is the length of the audio data, and assuming that the sampling time of the audio data is T and the sampling rate is f, L=f*T; and M is the maximum value of the sampled values, wherein for example, if the sampled value is 16bit, M=32767, and if the sampled value is 8bit, M=255, and so on.

By using the formula (1), it can be obtained by calculating that the relevance function sequence of the at least one audio frame is r(n), r(n+1), r(n+2)...r(N-2), r(N-1).

S1504, calculating the maximum value of the relevance function sequence that is corresponding to the at least one audio frame, to generate a reference sequence.

The reference sequence may be expressed as D(n), and this step may employ a maximum value calculation formula to solve the reference sequence, wherein the maximum value calculation formula may be expressed as follows:

$$D(n)=\max(r(n), r(n+1), r(n+2)......r(N-2), r(N-1))(2)$$

In the formula (2), max() is the maximum value solving function.

The reference sequence D(n) that is obtained by the formula (2) comprises N of elements, which are d(0), d(1)···d(N-1).

S1505, calculating the peak values of the reference sequence, to obtain the peak value characteristic sequence.

Assuming that v(n) is employed to express the peak value characteristic sequence, the constructed peak value characteristic sequence v(n) comprises N of wave peak characteristic elements, which are v(0), v(1)...v(N-1). In that, the numerical value of the v(0) may be used for describing the relevance between the audio frame x(0) and the audio frame following it, the numerical value of the v(1) may be used for describing the relevance between the x(1) and the audio frame following it, and the rest can be deduced accordingly. This step calculates the peak values of the reference sequence D(n), wherein the calculating principle is that: if the numerical value of the element d(i) (wherein, i is an integer and $0 \leq i \leq N-1$) is greater than or equal to the numerical values of the neighboring elements before and after the d(i), make v(i)=d(i); and if the numerical value of the element d(i) is less than the numerical value of any of the neighboring elements before and after the d(i), make v(i)=0. By this calculating principle, the numerical values of the peak value characteristic elements of the peak value characteristic sequence can be obtained.

Step S1503 to Step S1505 of the present embodiment may be the particular detailed steps of Step S1402 of the embodiment shown by Fig. 14.

S1506, acquiring a scanning interval that is corresponding to the preset interval coefficient.

The preset interval coefficient may be set according to actual requirements. Assuming that the preset interval coefficient is Q, the scanning interval that is corresponding to the preset interval coefficient may be [i-Q/2, i+Q/2] (wherein, i is an integer and $0 \leq i \leq N-1$).

S1507, regulating the peak value characteristic sequence by using the scanning interval that is corresponding to the preset interval coefficient, setting the numerical value of the peak value characteristic element that is corresponding to the maximum peak value in the scanning interval that is corresponding to the preset interval coefficient to be the target value, and setting numerical values of the peak value characteristic elements other than the peak value characteristic element that is corresponding to the maximum peak value in the scanning interval that is corresponding to the preset interval coefficient to be the initial values.

The target value and the characteristic value may be set according to actual requirements. The embodiment of the present invention may set the target value to be 1 and the reference value to be 0.

In Step S1506 to Step S1507, the objective of regulating the peak value characteristic sequence v(n) is: to make the peak value characteristic sequence v(n) to have only one maximum peak value within the scanning interval that is corresponding to the preset interval coefficient, to ensure the accuracy of the subsequent section dividing. Step S1506 to Step S1507 of the present embodiment may be the particular detailed steps of Step S1403 of the embodiment shown by Fig. 14.

S1508, acquiring the target index that is corresponding to the peak value characteristic elements whose numerical values are the target values from the peak value characteristic sequence that has been regulated. This step is required to acquire the target index that is corresponding to the peak value characteristic element whose numerical value is 1. For example, assuming that v(i)=1, the target index that this step can obtain is i.

S1509, according to the target index and the sampling rate of the target audio file, calculating the section breaking times.

This step may obtain the section breaking times according to the target index and the sampling rate of the target audio file. According to the example shown by the present embodiment, if the obtained target index is i and the sampling rate is f, the variation time of a certain section is i/f. For example, if the target index i=441000 and the sampling rate f=44100, i/f=100. That is, the target audio file has a break of the audio sections at the point of 100s.

S1510, dividing the target audio file into sections according to the section breaking times. According to the obtained audio section breaking times, the method can divide the target audio file into sections.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

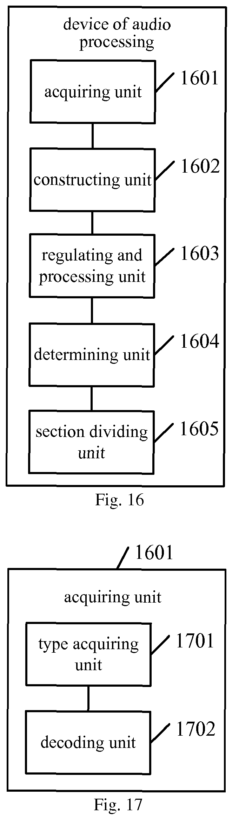

The structure and the function of the device of audio processing that is provided by the embodiments of the present disclosure will be described in details below with reference to Fig. 16 to Fig. 20. It should be noted that, the devices shown by Fig. 16 to Fig. 20 can operate in a terminal, in order to be applied to execute the methods shown by Fig. 14 to Fig. 15.

Referring to Fig. 16, which is the schematic diagram of the structure of the device of audio processing that is provided by the embodiment of the present disclosure, the device may comprise: an acquiring unit 1601, a constructing unit 1602, a regulating and processing unit 1603, a determining unit 1604 and a section dividing unit 1605.

The acquiring unit 1601 is for acquiring audio data of the target audio file, wherein the audio data comprise the at least one audio frame.

An audio file comprises audio data, and the audio data (for example, PCM data) can be obtained by decoding the audio file (for example, PCM decoding). The acquiring unit 1601 may decode the target audio file, to obtain the audio data of the target audio file. The audio data may comprise the at least one audio frame, and the audio data may be expressed as a frame sequence that is formed by successively the at least one audio frame.

In the embodiment of the present disclosure, it is set that the audio data comprise N of audio frames, wherein the N is a positive integer, that is, N is the number of sampling point of the audio data, and the audio data may be expressed as x(n), wherein n is a positive integer and n=0, 1, 2, N-1.

The constructing unit 1602 is for constructing the peak value characteristic sequence according to the relevance of the at least one audio frame, wherein the peak value characteristic sequence comprises at least one peak value characteristic element.

The peak value characteristic sequence may be used for reflecting the similarity of the at least one audio frame. Firstly, the constructing unit 1602 may employ a relevance calculation formula to calculate the relevance of the at least one audio frame, wherein the relevance function sequence of the at least one audio frame can be obtained from calculation. Assuming that r() is employed to express the relevance function, by relevance calculation r(n), r(n+1), r(n+2)⋯r(N-2), r(N-1) can be obtained. Secondly, the constructing unit 1602 may analyze the maximum value and the peak value of the relevance function sequence of the at least one audio frame, to construct the peak value characteristic sequence.

In the embodiment of the present disclosure, assuming that v(n) is employed to express the peak value characteristic sequence, the constructed peak value characteristic sequence v(n) comprises N of wave peak characteristic elements, which are v(0), v(1)...v(N-1). In that, the numerical value of the v(0) may be used for describing the relevance between the audio frame x(0) and the audio frame following it, the numerical value of the v(1) may be used for describing the relevance between the x(1) and the audio frame following it, and the rest can be deduced accordingly.

The regulating and processing unit 1603 is for regulating the peak value characteristic sequence.

The regulating and processing unit 1603 may regulate the peak value characteristic sequence $v(n)$ by using the scanning interval that is corresponding to the preset interval coefficient. The objective of the regulating is: to make the peak value characteristic sequence $v(n)$ to have only one maximum peak value within the scanning interval that is corresponding to the preset interval coefficient, to ensure the accuracy of the subsequent section dividing.

The determining unit 1604 is for determining the section breaking times according to the numerical values of the at least one peak value characteristic elements in the peak value characteristic sequence that has been regulated.

The numerical values of the peak value characteristic elements in the peak value characteristic sequence $v(n)$ that has been regulated may be used for describing the relevance between the audio frames, and accordingly, the determining unit 1604 may determine the audio section breaking times according to the numerical values of the at least one peak value characteristic elements in the peak value characteristic sequence that has been regulated.

The section dividing unit 1605 is for dividing the target audio file into sections according to the section breaking times.

According to the obtained audio section breaking times, the section dividing unit 1605 may divide the target audio file into sections.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

Referring to Fig. 17, which is the schematic diagram of the structure of the embodiment of the acquiring unit shown by Fig. 16, the acquiring unit 1601 may comprise: a type acquiring unit 1701 and a decoding unit 1702.

The type acquiring unit 1701 is for acquiring the type of the target audio file, wherein the type comprises: the dual sound track type or the single sound track type.

In general, an Internet audio bank stores multiple audio files and the attributes of each audio file. In that, the attributes of the audio files may comprise, but are not limited to: the audio characteristics of the audio files, the identifications of the audio files, the types of the audio files, and so on. The type acquiring unit 1701 may acquire the type of a target audio file from the Internet audio bank, and the actual acquiring method may comprise, but is not limited to: looking up the type of the target audio file in the Internet audio bank according to the identification of the target audio file; or, extracting an audio characteristic of the target audio file, and matching that with the audio characteristics of the audio files in the Internet audio bank, thereby locating the target audio file in the Internet audio bank, and acquiring a type of the target audio file.

The decoding unit 1702 is for, if the type of the target audio file is the single sound track type, decoding the content output by the target audio file from the single sound track to obtain the audio data; or, for, if the type of the target audio file is the dual sound track type, selecting one sound track from the dual sound tracks, and decoding the content output by the target audio file from the selected sound track to obtain the audio data; or processing the dual sound tracks into a mixed sound track, and decoding the content output by the target audio file from the mixed sound track to obtain the audio data.

In that, if the type of the target audio file is the single sound track type, the target audio file outputs the audio content from one sound track, and the decoding unit 1702 is required to decode the audio content output from the single sound track to obtain the audio data. If the type of the target audio file is the dual sound track type, the target audio file outputs the audio content by two sound tracks, and the decoding unit 1702 may select the audio content output from one of the sound tracks to decode to obtain the audio data. Further, the decoding unit 1702 may also firstly employ processing modes such as Downmix to process the two sound tracks into a mixed sound track, and then decode the audio content output from the mixed sound track to obtain the audio data.

In the embodiment of the present disclosure, it is set that the audio data comprise N of audio frames, wherein the N is a positive integer, that is, N is the number of sampling point of the audio data, and the audio data may be expressed as $x(n)$, wherein n is a positive integer and n=0, 1, 2, N-1.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

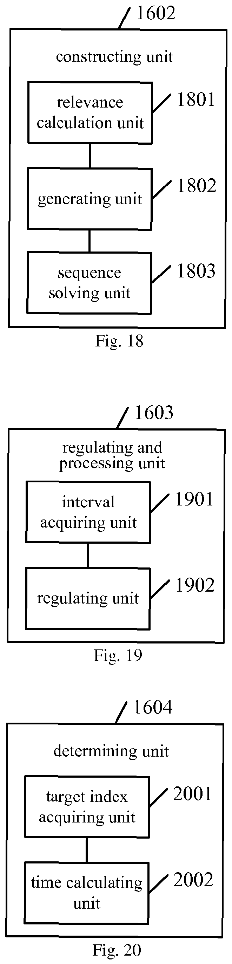

Referring to Fig. 18, which is the schematic diagram of the structure of the embodiment of the constructing unit shown by Fig. 16, the constructing unit 1602 may comprise: a relevance calculation unit 1801, a generating unit 1802 and a sequence solving unit 1803.

The relevance calculation unit 1801 is for calculating the relevance of the audio frames of the at least one audio frame, to obtain a relevance function sequence that is corresponding to the at least one audio frame.

The relevance calculation unit 1801 may employ a relevance calculation formula to calculate the relevance of the at least one audio frame, wherein the relevance calculation formula may be expressed as the formula (1) in the embodiment shown by Fig. 2. by calculating with the formula (1), the relevance function sequence of the at least one audio frame $r(n)$, $r(n+1)$, $r(n+2)$...$r(N-2)$, $r(N-1)$can be obtained.

The generating unit 1802 is for calculating the maximum value of the relevance function sequence that is corresponding to the at least one audio frame, to generate a reference sequence.

The reference sequence may be expressed as $D(n)$, and the generating unit 1802 may employ a maximum value calculation formula to solve the reference sequence, wherein the maximum value calculation formula may be expressed as the formula (2) in the embodiment shown by Fig. 2. The reference sequence $D(n)$ that is obtained by the formula (2) comprises N of elements, which are $d(0)$, $d(1)$...$d(N-1)$.

The sequence solving unit 1803 is for calculating the peak values of the reference sequence, to obtain the peak value characteristic sequence.

Assuming that $v(n)$ is employed to express the peak value characteristic sequence, the constructed peak value characteristic sequence $v(n)$ comprises N of wave peak characteristic elements, which are $v(0)$, $v(1)$...$v(N-1)$. In that, the numerical value of the $v(0)$ may be used for describing the relevance between the audio frame $x(0)$ and the audio frame following it, the numerical value of the $v(1)$ may be used for describing the relevance between the $x(1)$ and the audio frame following it, and the rest can be deduced accordingly. The sequence solving unit 1803 calculates the peak values of the reference sequence $D(n)$, wherein the calculating principle is that: if the numerical value of the element $d(i)$ (wherein, i is an integer and $0 \leq i \leq N-1$) is greater than or equal to the numerical values of the neighboring elements before and after the $d(i)$, make $v(i)=d(i)$; and if the numerical value of the element $d(i)$ is less than the numerical value of any of the neighboring elements before and after the $d(i)$, make $v(i)=0$. By the calculating principle, the numerical values of the peak value characteristic elements of the peak value characteristic sequence can be obtained.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

Referring to Fig. 19, which is the schematic diagram of the structure of the embodiment of the regulating and processing unit shown by Fig. 16, the regulating and processing unit 1603 may comprise: an interval acquiring unit 1901 and a regulating unit 1902.

The interval acquiring unit 1901 is for acquiring a scanning interval that is corresponding to a preset interval coefficient.

The preset interval coefficient may be set according to actual requirements. Assuming that the preset interval coefficient is Q, the scanning interval that is corresponding to the preset interval coefficient may be [i-Q/2, i+Q/2] (wherein, i is an integer and $0 \leq i \leq N-1$).

The regulating unit 1902 is for regulating the peak value characteristic sequence by using the scanning interval that is corresponding to the preset interval coefficient, setting the numerical value of the peak value characteristic element that is corresponding to the maximum peak value in the scanning interval that is corresponding to the preset interval coefficient to be the target value, and setting the scanning interval that is corresponding to the preset interval coefficient to be the initial value. The target value and the characteristic value may be set according to actual requirements. The embodiment of the present invention may set the target value to be 1 and the reference value to be 0.

The objective of regulating the peak value characteristic sequence $v(n)$ is: to make the peak value characteristic sequence $v(n)$ to have only one maximum peak value within the scanning interval that is corresponding to the preset interval coefficient, to ensure the accuracy of the subsequent section dividing.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

Referring to Fig. 20, which is the schematic diagram of the structure of the embodiment of the determining unit shown by Fig. 16, the determining unit 1604 may comprise: a target index acquiring unit 2001 and a time calculating unit 2002.

The target index acquiring unit 2001 is for acquiring the target index that is corresponding to the peak value characteristic elements whose numerical values are the target values from the peak value characteristic sequence that has been regulated.

According to the example shown by the embodiment shown by Fig. 19, the target index acquiring unit 2001 is required to acquire the target index that is corresponding to the peak value characteristic element whose numerical value is 1. For example, assuming that v(i)=1, the target index that the target index acquiring unit 2001 can obtain is i.

The time calculating unit 2002 is for according to the target index and the sampling rate of the target audio file, calculating the section breaking times.

The time calculating unit 2002 can obtain the section breaking times by dividing the target index by the sampling rate of the target audio file. According to the example shown by the present embodiment, if the obtained target index is i and the sampling rate is f, the variation time of a certain section is i/f. For example, if the target index i=441000 and the sampling rate f=44100, i/f=100. That is, the target audio file has a break of the audio sections at the point of 100s.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

The embodiments of the present disclosure further discloses a terminal, wherein the terminal may be a PC (Personal Computer), a notebook computer, a mobile telephone, a PAD (tablet computer), a vehicle terminal, an intelligent wearable device and so on. The terminal may comprise a device of audio processing, and the structure and the function of the device can be seen in the relevant description on the above embodiments shown by Fig. 16 to Fig. 20 and will not be described in details here.

In the embodiment of the present disclosure, the present disclosure can construct the peak value characteristic sequence according to the relevance of the at least one audio frame in the audio data of the target audio file, regulate the peak value characteristic sequence, determine the section breaking times according to the numerical values of the at least one peak value characteristic elements in the peak value characteristic sequence that has been regulated, and divide the target audio file into sections according to the section breaking times. The audio processing process realizes the section dividing of the target audio file, based on the relevance characteristic of the audio frames between the audio sections, and improves the efficiency of section dividing processing and the intelligence of audio processing.

The above descriptions are merely preferable embodiments of the present disclosure, and are not limiting the present disclosure. The scope of protection is defined by the appended claims.

**Claims**

1. A method of audio processing, comprising:

    acquiring (S101;5801; S1401) file data of a target audio file;
    constructing (S102;S802; S1402) a relevance characteristic sequence according to relevance characteristic data between component elements of the file data; the method being **characterised by** further comprising:

       optimizing (S103; S803; S1403) the relevance characteristic sequence according to a preset total number of sections;
       determining (S104; S804;S1404) the section breaking times according to a numerical value of at least one characteristic element in the relevance characteristic sequence that has been optimized; and
       dividing (S105; S805; S1405) the target audio file into sections of the preset total number of sections according to the section breaking times.

2. The method according to claim 1, wherein the file data refers to a subtitle file, the subtitle file consists of successively at least one single sentence of characters; constructing the relevance characteristic sequence according to the relevance characteristic data between the component elements of the file data comprises:
    constructing a subtitle characteristic sequence according to the similarity degree between the at least one single sentence of characters, wherein the subtitle characteristic sequence comprises at least one characteristic element of characters.

3. The method according to claim 2, wherein constructing a subtitle characteristic sequence according to the similarity degree between the at least one single sentence of characters comprises:

determining (S202) the number of the characteristic elements of characters that construct the subtitle characteristic sequence according to the number of the at least one single sentence of characters;
determining(S203) indexes of the characteristic elements of characters that construct the subtitle characteristic sequence according to the order of the single sentences of the at least one single sentence of characters;
setting (S204) the numerical values of the characteristic elements of characters that construct the subtitle characteristic sequence to be initial values;
for any one target single sentence of the at least one single sentence of characters,
changing (S205) the numerical value of the characteristic element of characters that is corresponding to the target single sentence of characters from the initial value to a target value when a maximum similarity degree between the target single sentence of characters and the single sentence of characters following it is greater than a preset similarity threshold; and
constructing (S206) the subtitle characteristic sequence according to the number, the indexes and the numerical values of the characteristic elements of characters.

4. The method according to claim 3, wherein the optimizing the relevance characteristic sequence according to the preset total number of sections comprises:

counting (S207) the number of the characteristic elements of characters whose numerical values are the target values in the subtitle characteristic sequence;
determining (S208) whether the number is within a fault tolerance range that is corresponding to the preset total number of sections;
in the negative case, adjusting(S209) the value of the preset similarity threshold to adjust the numerical values of the characteristic elements of characters in the subtitle characteristic sequence.

5. The method according to claim 4, wherein, in the negative case, adjusting the value of the preset similarity threshold to adjust the numerical values of the characteristic elements of characters in the subtitle characteristic sequence comprises:

increasing the preset similarity threshold according to a preset step length to adjust the numerical values of the characteristic elements of characters in the subtitle characteristic sequence when the number is greater than the maximum fault tolerance value in the fault tolerance range that is corresponding to the preset total number of sections; and
decreasing the preset similarity threshold according to a preset step length to adjust the numerical values of the characteristic elements of characters in the subtitle characteristic sequence when the number is less than the maximum fault tolerance value in the fault tolerance range that is corresponding to the preset total number of sections.

6. The method according to claim 5, wherein the determining the section breaking times according to the numerical values of the at least one characteristic element in the relevance characteristic sequence that has been optimized comprises:

acquiring (S210) the target indexes that are corresponding to the characteristic elements of characters whose numerical values are the target values from the subtitle characteristic sequence that has been optimized;
locating (S211) the single sentences of characters at the section breaks in the subtitle file according to the target indexes; and
reading (S212) the section breaking times from the subtitle file according to the single sentences of characters at the section breaks.

7. The method according to claim 1, wherein the file data refers to the subtitle file, the subtitle file consists of successively the at least one single sentence of characters; constructing the relevance characteristic sequence according to the relevance characteristic data between the component elements of the file data comprises:
constructing the time characteristic sequence according to the time interval between the at least one single sentence of characters, wherein the time characteristic sequence comprises at least one time characteristic element.

8. The method according to claim 7, wherein the constructing the time characteristic sequence according to the time interval between the at least one single sentence of characters comprises:

> determining (S902) the number of the time characteristic elements that construct the time characteristic sequence according to the number of the at least one single sentence of characters;
> determining (S903) the indexes of the time characteristic elements that construct the time characteristic sequence according to the order of the single sentences of characters of the at least one single sentence of characters;
> for any one target single sentence of characters of the at least one single sentence of characters, setting (S904) the time interval between the target single sentence of characters and the single sentence of characters that is immediately before the target single sentence of characters to be the numerical value of the time characteristic element that is corresponding to the target single sentence of characters; and
> constructing (S905) the time characteristic sequence according to the number, the indexes and the numerical values of the time characteristic elements that construct the time characteristic sequence.

9. The method according to claim 8, wherein the optimizing the relevance characteristic sequence according to the preset total number of sections comprises:

> looking up (S906) from the time characteristic sequence the first preset section number minus 1 of the time characteristic elements whose numerical values are in a descending order; and
> adjusting (S907) the numerical values of the time characteristic elements that have been found to be the target values, and
> adjusting (S907) the numerical values of the time characteristic elements other than the time characteristic elements that have been found in the time characteristic sequence to be reference values.

10. The method according to claim 9, wherein the determining the section breaking times according to the numerical values of the at least one characteristic element in the relevance characteristic sequence that has been optimized comprises:

> acquiring (S908) the target indexes that are corresponding to the time characteristic elements whose numerical values are the target values from the time characteristic sequence that has been adjusted;
> locating (S909) the single sentences of characters at the section breaks in the subtitle file according to the target indexes; and
> reading (S910) the section breaking times from the subtitle file according to the single sentences of characters at the section breaks.

11. The method according to claim 1, wherein the file data refers to audio data, the audio data comprise at least one audio frame, constructing the relevance characteristic sequence according to relevance characteristic data between the component elements of the file data comprises:
constructing a peak value characteristic sequence according to the relevance of the at least one audio frame, wherein the peak value characteristic sequence comprises at least one peak value characteristic element.

12. The method according to claim 11, wherein the constructing the peak value characteristic sequence according to the relevance of the at least one audio frame comprises:

> calculating (S1503) the relevance of the audio frames of the at least one audio frame, to obtain a relevance function sequence that is corresponding to the at least one audio frame;
> calculating (S1504) the maximum value of the relevance function sequence that is corresponding to the at least one audio frame, to generate a reference sequence; and
> calculating (S1505) the peak values of the reference sequence, to obtain the peak value characteristic sequence.

13. The method according to claim 12, wherein the optimizing the relevance characteristic sequence according to the preset total number of sections comprises:
acquiring (S1506) a scanning interval that is corresponding to a preset interval coefficient; and regulating (S1507) the peak value characteristic sequence by using the scanning interval that is corresponding to the preset interval coefficient, setting the numerical value of the peak value characteristic element that is corresponding to the maximum peak value in the scanning interval that is corresponding to the preset interval coefficient to be the target value, and setting the numerical values of the peak value characteristic elements other than the peak value characteristic element that is corresponding to the maximum peak value in the scanning interval that is corresponding to the preset interval coefficient to be the initial values.

14. The method according to claim 13, wherein the determining the section breaking times according to the numerical values of at least one characteristic element in the relevance characteristic sequence that has been optimized comprises acquiring (S1508) the target indexes that are corresponding to the peak value characteristic elements whose numerical values are the target values from the peak value characteristic sequence that has been regulated; and calculating (S1509) the section breaking times according to the target indexes and a sampling rate of the target audio file.

15. A device of audio processing, comprising:

an acquiring unit (301), for acquiring file data of a target audio file;
a constructing unit (302), for constructing a relevance characteristic sequence according to relevance characteristic data between component elements of the file data; the device being **characterised by** further comprising:

an optimizing unit (303), for optimizing the relevance characteristic sequence according to the preset total number of sections;
a determining unit (304), for determining section breaking times according to numerical values of at least one characteristic element in the relevance characteristic sequence that has been optimized; and
a section dividing unit (305), for dividing the target audio file into sections of the preset total number of sections according to the section breaking times.

**Patentansprüche**

1. Verfahren zum Audioverarbeiten, umfassend:

Erwerben (S101; S801; S1401) von Dateidaten einer Ziel-Audiodatei;
Aufbauen (S102; S802; S1402) einer kennzeichnenden Relevanzsequenz gemäß kennzeichnenden Relevanzdaten zwischen Bauteilelementen der Dateidaten; wobei das Verfahren **dadurch gekennzeichnet ist, dass** es weiterhin umfasst:
Optimieren (S103; S803; S1403) der kennzeichnenden Relevanzsequenz gemäß einer voreingestellten Gesamtzahl von Abschnitten;
Bestimmen (S104; S804; S1404) der Abschnittsbruch-Zeiten gemäß einem numerischen Wert wenigstens eines kennzeichnenden Elements in der kennzeichnenden Relevanzsequenz, die optimiert wurde;und
Unterteilen (S105; S805; S1405) der Ziel-Audiodatei der voreingestellten Gesamtzahl von Abschnitten gemäß den Abschnittsbruch-Zeiten.

2. Verfahren gemäß Anspruch 1, wobei sich die Dateidaten auf eine Untertiteldatei beziehen, die Untertiteldatei aus aufeinanderfolgend wenigstens einem einzigen Zeichensatz gebildet ist; Aufbauen der kennzeichnenden Relevanzsequenz gemäß den kennzeichnenden Relevanzdaten zwischen den Bauteilelementen der Dateidaten, umfassend:
Aufbauen einer kennzeichnenden Untertitelsequenz gemäß dem Ähnlichkeitsgrad zwischen dem wenigstens einen Einzel-Zeichensatz, wobei die kennzeichnende Untertitelsequenz wenigstens ein kennzeichnendes Zeichenelement umfasst.

3. Verfahren gemäß Anspruch 2, wobei das Aufbauen einer kennzeichnenden Untertitelsequenz gemäß dem Ähnlichkeitsgrad zwischen dem wenigstens einen Einzel-Zeichensatz umfasst:

Bestimmen (S202) der Anzahl der kennzeichnenden Zeichenelemente, die die kennzeichnende Untertitelsequenz gemäß der Anzahl des wenigstens einen Einzel-Zeichensatzes aufbauen;
Bestimmen (S203) von Indexen der kennzeichnenden Zeichenelemente, die die kennzeichnende Untertitelsequenz gemäß der Reihenfolge der Einzelsätze des wenigstens einen Einzel-Zeichensatzes aufbauen;
Einstellen (S204) der numerischen Werte der kennzeichnenden Zeichenelemente, die die kennzeichnende Untertitelsequenz als Anfangswerte aufbauen;
für irgendeinen Ziel-Einzelsatz des wenigstens einen Einzel-Zeichensatzes
Ändern (S205) des numerischen Wertes des kennzeichnenden Zeichenelements, das dem Ziel-Einzelzeichensatz von dem Anfangswert zu einem Zielwert entspricht, wenn ein maximaler Ähnlichkeitssatz zwischen dem Ziel-Einzelzeichensatz und dem Einzel-Zeichensatz je nach dem besteht, ob er größer ist als ein voreingestellter Ähnlichkeits-Schwellenwert; und

Aufbauen (S206) der Untertitel-Zeichensequenz gemäß der Anzahl, den Indexen und den numerischen Werten der kennzeichnenden Zeichenelemente.

4. Verfahren gemäß Anspruch 3, wobei das Optimieren der kennzeichnenden Relevanzsequenz gemäß einer voreingestellten Gesamtzahl von Abschnitten umfasst:

Zählen (S207) der Anzahl von kennezeichnenden Zeichenelementen, deren numerische Werte die Zielwerte in der kennzeichnenden Untertitelsequenz sind;

Bestimmen (S208), ob die Anzahl innerhalb eines Fehlertoleranzbereichs liegt, der der voreingestellten Gesamtzahl von Abschnitten entspricht; im negativen Fall, Anpassen (S209) des Wertes des voreingestellten Ähnlichkeits-Schwellenwertes zum Anpassen der numerischen Werte der kennzeichnenden Zeichenelemente in der kennzeichnenden Untertitelsequenz.

5. Verfahren gemäß Anspruch 4, wobei im negativen Fall das Anpassen des Wertes des voreingestellten Ähnlichkeits-Schwellenwertes zum Anpassen der numerischen Werte der kennzeichnenden Zeichenelemente in der kennzeichnenden Untertitel-Zeichensequenz umfasst:

Erhöhen des voreingestellten Ähnlichkeits-Schwellenwertes gemäß einer voreingestellten Schrittlänge zum Anpassen der numerischen Werte der kennzeichnenden Zeichenelemente in der kennzeichnenden Untertitelseuqenz, wenn die Anzahl größer ist als der maximale Fehlertoleranzwert in dem Fehlertoleranzbereich, der der voreingestellten Anzahl von Abschnitten entspricht; und

Absenken des voreingestellten Ähnlichkeits-Schwellenwertes auf eine voreingestellte Schrittlänge zum Anpassen der numerischen Werte der kennzeichnenden Zeichenelemente in der kennzeichnenden Untertitelsequenz, wenn die Anzahl kleiner ist als der maximale Fehlertoleranzwert in dem Fehlertoleranzbereich, der der voreingestellten Gesamtzahl von Abschnitten entspricht.

6. Verfahren gemäß Anspruch 5, wobei das Bestimmen der Abschnittsbruch-Zeiten gemäß den numerischen Werten des wenigstens einen kennzeichnenden Elements in der kennzeichnenden Relevanzsequenz, die optimiert wurde, umfasst:

Erwerben (S210) der Zielindexe, die den kennzeichnenden Zeichenelementen entsprechen, deren numerische Werte die Zielwerte von der kennzeichnenden Untertitelsequenz sind, die optimiert wurden;

Lokalisieren (S211) der Einzel-Zeichensätze an den Abschnittsbrüchen in der Untertiteldatei gemäß den Zielindexen; und

Lesen (S212) der Abschnittsbruch-Zeiten von der Untertiteldatei gemäß den Einzel-Zeichensätzen an den Abschnittsbrüchen.

7. Verfahren gemäß Anspruch 1, wobei die Dateidaten sich auf die Untertiteldatei beziehen, die Untertiteldatei aus aufeinanderfolgend wenigstens einem Einzel-Zeichensatz gebildet ist; das Aufbauen der kennzeichnenden Relevanzsequenz gemäß den kennzeichnenden Relevanzdaten zwischen den Bauteilelementen der Dateidaten umfasst: Aufbauen der kennzeichnenden Zeitsequenz gemäß dem Zeitintervall zwischen dem wenigstens einen Einzel-Zeichensatz, wobei die kennzeichnende Zeitsequenz wenigstens ein kennzeichnendes Zeitelement umfasst.

8. Verfahren gemäß Anspruch 7, wobei das Aufbauen der kennzeichnenden Zeitsequenz gemäß dem Zeitintervall zwischen dem wenigstens einen Einzel-Zeichensatz umfasst:

Bestimmen (S902) der Anzahl von kennzeichnenden Zeitelementen, die die kennzeichnende Zeitsequenz gemäß der Anzahl von wenigstens einem Einzel-Zeichensatz aufbauen;

Bestimmen (S903) der Indexe der kennzeichnenden Zeitelemente, die die kennzeichnende Zeitsequenz gemäß der Reihenfolge der Einzel-Zeichensätze des wenigstens einen Einzel-Zeichensatzes aufbauen;

für jeden Einzel-Zeichensatz des wenigstens einen Einzel-Zeichensatzes Einstellen (S904) des Zeitintervalls zwischen dem Ziel-Einzelzeichensatz und dem Einzel-Zeichensatz, der unmittelbar vor dem Ziel-Einzelzeichensatz als der numerische Wert des kennzeichnenden Zeitelements ist, das dem Ziel-Einzelzeichensatz entspricht; und

Aufbauen (S905) der kennzeichnenden Zeitsequenz gemäß der Anzahl, den Indexen und den numerischen Werten der kennzeichnenden Zeitelemente, die die kennzeichnende Zeitsequenz aufbauen.

9. Verfahren gemäß Anspruch 8, wobei das Optimieren der kennzeichnenden Relevanzsequenz gemäß der voreingestellten Gesamtzahl von Abschnitten umfasst:

Nachschlagen (S906) der ersten voreingestellten Abschnittsnummer minus 1 der kennzeichnenden Zeitelemente, deren Werte in einer absteigenden Reihenfolge sind, aus der kennzeichnenden Zeitsequenz; und
Anpassen (S907) der numerischen Werte der kennzeichnenden Zeitelemente, von denen festgestellt wurde, dass sie Zielwerte sind; und
Anpassen (S907) der numerischen Werte der kennzeichnenden Zeitelemente, die keine kennzeichnenden Zeitelemente sind, von denen in der kennzeichnenden Zeitsequenz festgestellt wurde, dass sie Referenzwerte sind.

10. Verfahren gemäß Anspruch 9, wobei das Bestimmen der Abschnitts-Bruchzeiten gemäß den numerischen Werten des wenigstens einen kennzeichnenden Elements in der kennzeichnenden Relevanzsequenz, die optimiert wurde, umfasst:

Erwerben (S908) der Zielindexe, die den kennzeichnenden Zeitelementen entsprechen, deren numerische Werte die Zielwerte von der kennzeichnenden Zeitsequenz sind, die angepasst wurde;
Lokalisieren (S909) der Einzel-Zeichensätze an den Abschnittsbrüchen in der Untertiteldatei gemäß den Zielindexen; und
Lesen (S910) der Abschnittsbruch-Zeiten von der Untertiteldatei gemäß den Einzel-Zeichensätzen an den Abschnittsbrüchen.

11. Verfahren gemäß Anspruch 1, wobei die Datendatei sich auf Audiodaten bezieht, wobei die Audiodaten wenigstens einen Audioframe umfassen, der die kennzeichnende Relevanzsequenz gemäß der kennzeichnenden Relevanzdaten zwischen den Bauelementen der Dateidaten umfasst:
Aufbauen einer kennzeichnenden Sequenz eines Spitzenwertes gemäß der Relevanz des wenigstens einen Audioframes, wobei die kennzeichnende Sequenz des Spitzenwertes wenigstens ein kennzeichnendes Element eines Spitzenwertes umfasst.

12. Verfahren gemäß Anspruch 11, wobei das Aufbauen der kennzeichnenden Sequenz des Spitzenwertes gemäß der Relevanz des wenigstens einen Audioframes umfasst:

Berechnen (S1503) der Relevanz der Audioframes des wenigstens einen Audioframes zum Erhalten einer Relevanz-Funktionssequenz, die dem wenigstens einen Audioframe entspricht;
Berechnen (S1504) des maximalen Wertes der Relevanz-Funktionssequenz, die dem wenigstens einen Audioframe entspricht, um eine Referenzsequenz zu erzeugen; und
Berechnen (S1505) der Spitzenwerte der Referenzsequenz zum Erhalten der kennzeichnenden Sequenz des Spitzenwertes.

13. Verfahren gemäß Anspruch 12, wobei das Optimieren der kennzeichnenden Relevanzsequenz gemäß der voreingestellten Gesamtzahl von Abschnitten umfasst:
Erwerben (S1506) eines Scannintervalls, der dem voreingestellten Intervallkoeffizienten entspricht; und Regulieren (S1507) der kennzeichnenden Sequenz des Spitzenwertes durch Verwenden des Scanintervalls, der dem voreingestellten Intervallkoeffienten entspricht, Einstellen des numerischen Wertes des kennzeichnenden Elements des Spitzenwertes, das dem maximalen Spitzenwert in dem Scanintervall entspricht, das dem voreingestellten Intervallkoeffizienten als Zielwert entspricht, und Einstellen der numerischen Werte der kennzeichnenden Elemente der Spitzenwerte, die kein kennzeichnendes Element der Spitzenwerte sind, das dem maximalen Spitzenwert in dem Scanintervall entspricht, das dem voreingestellten Intervallkoeffizienten als Anfangswerte entspricht.

14. Verfahren gemäß Anspruch 13, wobei das Bestimmen der Abschnittsbruch-Zeiten gemäß den numerischen Werten wenigstens eines kennzeichnenden Elements in der kennzeichnenden Relevanzsequenz, die optimiert wurde, das Erwerben (S1508) der Zielindexe umfasst, die den kennzeichnenden Elementen des Spitzenwertes entsprechen, deren numerische Werte die Zielwerte von der kennzeichnenden Sequenz des Spitzenwertes sind, die reguliert wurde; und Berechnen (S1509) der Abschnittsbruch-Zeiten gemäß den Zielindexen und einer Probennahme-Rate der Ziel-Audiodatei.

15. Vorrichtung einer Audioverarbeitung, umfassend:

eine Erwerbseinheit (301) zum Erwerben von Dateidaten einer Ziel-Audiodatei;

eine Aufbaueinheit (302) zum Aufbauen einer kennzeichnenden Relevanzsequenz gemäß den kennzeichnenden Relevanzdaten zwischen Bauelementen der Dateidaten; wobei die Vorrichtung **dadurch gekennzeichnet ist, dass** sie weiterhin umfasst:

eine Optimierungseinheit (303) zum Optimieren der kennzeichnenden Relevanzsequenz gemäß der voreingestellten Gesamtzahl von Abschnitten;

eine Bestimmungseinheit (304) zum Bestimmen von Abschnittsbruch-Zeiten gemäß numerischen Werten wenigstens eines kennzeichnenden Elements in der kennzeichnenden Relevanzsequenz, die optimiert wurde; und

eine Abschnitt unterteilende Einheit (305) zum Unterteilen der Ziel-Audiodatei in Abschnitte der voreingestellten Gesamtzahl von Abschnitten gemäß den Abschnittsbruch-Zeiten.

**Revendications**

1. Procédé de traitement audio, comprenant :

l'acquisition (S101 ; S801 ; S1401) de données de fichier d'un fichier audio cible ;
l'élaboration (S102 ; S802 ; S1402) d'une séquence caractéristique de pertinence en fonction de données caractéristiques de pertinence parmi des éléments de composant du fichier de données ; le procédé étant **caractérisé en ce qu'**il comprend en outre :
l'optimisation (S103 ; S803 ; S1403) de la séquence caractéristique de pertinence en fonction d'un nombre total prédéfini de sections ;
la détermination (S104 ; S804 ; S1404) de temps de rupture de sections en fonction d'une valeur numérique d'au moins un élément caractéristique dans la séquence caractéristique de pertinence qui a été optimisée ; et
la division (S105 ; S805 ; S1405) du fichier audio cible en sections par le nombre total prédéfini de sections en fonction des temps de rupture des sections.

2. Procédé selon la revendication 1, dans lequel les données de fichier font référence à un fichier de sous-titres, le fichier de sous-titres se compose successivement d'au moins une phrase unique de caractères ; l'élaboration de la séquence caractéristique de pertinence en fonction des données caractéristiques de pertinence entre les éléments de composant du fichier de données comprend :
l'élaboration d'une séquence caractéristique de sous-titres en fonction du degré de similarité entre l'au moins une unique phrases de caractères, dans laquelle la séquence caractéristique de sous-titres comprend au moins un élément caractéristiques de caractères.

3. Procédé selon la revendication 2, dans lequel l'élaboration d'une séquence caractéristique de sous-titres en fonction du degré de similarité entre l'au moins une unique phrase de caractères comprend :

la détermination (S202) du nombre d'éléments caractéristiques de caractères qui élaborent la séquence caractéristique de sous-titres en fonction du nombre de l'au moins une unique phrase de caractères ;
la détermination (S203) d'indices des éléments caractéristiques de caractères qui élaborent la séquence caractéristique de sous-titres en fonction de l'ordre des uniques phrases parmi l'au moins une unique phrase de caractères ;
la définition (S204) des valeurs numériques des éléments caractéristiques de caractères qui élaborent la séquence caractéristique de sous-titres comme étant des valeurs initiales ;
pour n'importe quelle phrase unique cible de l'au moins une unique phrase de caractères,
modifier (S205) la valeur numérique de l'élément caractéristique de caractères qui correspond à l'unique phrase de caractères cible de la valeur initiale à une valeur cible lorsqu'un degré de similarité maximum entre l'unique phrase de caractères cible et l'unique phrase de caractères qui la suit est supérieur à un seuil de similarité prédéfini ; et
l'élaboration (S206) de la séquence caractéristique de sous-titres en fonction du nombre, des indices et des valeurs numériques des éléments caractéristiques de caractères.

4. Procédé selon la revendication 3, dans lequel l'optimisation de la séquence caractéristique de pertinence en fonction du nombre total prédéfini de sections comprend :

le comptage (S207) du nombre des éléments caractéristique de caractères dont les valeurs numériques sont les valeurs cibles dans la séquence caractéristique de sous-titres ;

la détermination (S208) pour savoir si le nombre se trouve dans une plage de tolérance par défaut qui correspond au nombre total prédéfini de sections ;

dans la négative, régler (S209) la valeur du seuil de similarité prédéfini pour régler les valeurs numériques des éléments caractéristiques de caractères dans la séquence caractéristique de sous-titres.

5. Procédé selon la revendication 4, dans lequel, dans la négative, régler la valeur du seuil de similarité prédéfini pour régler les valeurs numériques des éléments caractéristiques de caractères dans la séquence caractéristique de sous-titres comprend :

l'augmentation du seuil de similarité prédéfini en fonction d'une longueur d'étape prédéfinie pour régler les valeurs numériques des éléments caractéristiques de caractères dans la séquence caractéristique de sous-titres lorsque le nombre est supérieur à la valeur de tolérance par défaut maximum dans la plage de tolérance par défaut qui correspond au nombre total prédéfini de sections ; et

la diminution du seuil de similarité prédéfini en fonction d'une longueur d'étape prédéfinie pour régler les valeurs numériques des éléments caractéristiques de caractères dans la séquence caractéristique de sous-titres lorsque le nombre est inférieur à la valeur de tolérance par défaut maximum dans la plage de tolérance par défaut qui correspond au nombre total prédéfini de sections.

6. Procédé selon la revendication 5, dans lequel la détermination des temps de rupture de sections en fonction des valeurs numériques de l'au moins un élément caractéristique dans la séquence caractéristique de pertinence qui a été optimisée comprend :

l'acquisition (S210) des indices cibles qui correspondent aux éléments caractéristiques de caractères dont les valeurs numériques sont les valeurs cibles provenant de la séquence caractéristique de sous-titres qui a été optimisée ;

la localisation (S211) des uniques phrases de caractères aux ruptures de sections dans le fichier de sous-titres en fonction des indices cibles ; et

la lecture (S212) des temps de rupture de sections à partir du fichier de sous-titres en fonction des uniques phrases de caractères aux ruptures de sections.

7. Procédé selon la revendication 1, dans lequel les données de fichier font référence au fichier de sous-titres, le fichier de sous-titres se compose successivement de l'au moins une unique phrase de caractères ; l'élaboration de la séquence caractéristique de pertinence en fonction des données caractéristiques de pertinence entre les éléments de composant des données de fichier comprend :

l'élaboration de la séquence caractéristiques temporelle en fonction de l'intervalle temporel entre l'au moins une unique phrase de caractères, dans laquelle la séquence caractéristiques temporelle comprend au moins un élément caractéristique temporel.

8. Procédé selon la revendication 7, dans lequel l'élaboration de la séquence caractéristique temporelle en fonction de l'intervalle temporel entre l'au moins une phrase unique de caractères comprend :

la détermination (S902) du nombre des éléments caractéristiques temporels qui élaborent la séquence caractéristique temporelle en fonction du nombre de l'au moins une unique phrase de caractères ;

la détermination (S903) des indices des éléments caractéristiques temporels qui élaborent la séquence caractéristique temporelle en fonction de l'ordre des phrases uniques de caractères de l'au moins une unique phrase de caractères ;

pour n'importe quelle unique phrase de caractères cible de l'au moins une unique phrase unique de caractères, la définition (S904) de l'intervalle temporel entre l'unique phrase de caractères cible et l'unique phrase de caractères qui se trouve immédiatement avant l'unique phrase de caractères cible comme étant la valeur numérique de l'élément caractéristique temporel qui correspond à l'unique phrase de caractères cible ; et

l'élaboration (S905) de la séquence caractéristique temporelle en fonction du nombre, des indices et des valeurs numériques des éléments caractéristiques temporels qui élaborent la séquence caractéristique temporelle.

9. Procédé selon la revendication 8, dans lequel l'optimisation de la séquence caractéristique de pertinence en fonction du nombre total prédéfini de sections comprend :

la recherche (S906) à partir de la séquence caractéristique temporelle du premier nombre de sections prédéfinies moins 1 des éléments caractéristiques temporels dont les valeurs numériques sont en ordre descendant ; et le réglage (S907) des valeurs numériques des éléments caractéristiques temporels qui ont été trouvés comme étant les valeurs cibles ; et

le réglage (S907) des valeurs numériques des éléments caractéristiques temporels autres que les éléments caractéristiques temporels qui ont été trouvés dans la séquence caractéristique temporelle comme étant des valeurs de référence.

10. Procédé selon la revendication 9, dans lequel la détermination des temps de rupture de sections en fonction des valeurs numériques de l'au moins un élément caractéristique dans la séquence caractéristique de pertinence qui a été optimisée comprend :

l'acquisition (S908) des indices cibles qui correspondent aux éléments caractéristiques temporels dont les valeurs numériques sont les valeurs cibles provenant de la séquence caractéristiques temporels qui a été réglée ; la localisation (S909) des uniques phrases de caractères aux ruptures de sections dans le fichier de sous-titres en fonction des indices cibles ; et

la lecture (S910) des temps de rupture de sections à partir du fichier de sous-titres en fonction des uniques phrases de caractères aux ruptures de sections.

11. Procédé selon la revendication 1, dans lequel les données de fichier font référence aux données audio, les données audio comprennent au moins une trame audio, l'élaboration de la séquence caractéristique de pertinence en fonction des données caractéristiques de pertinence entre les éléments de composant du fichier de données comprend : l'élaboration d'une séquence caractéristique de valeur de crête en fonction de la pertinence de l'au moins une trame audio, dans lequel la séquence caractéristiques de valeur de crête comprend au moins un élément caractéristique de valeur de crête.

12. Procédé selon la revendication 11, dans lequel l'élaboration de la séquence caractéristique de valeur de crête en fonction de la pertinence de l'au moins une trame audio comprend :

le calcul (S1503) de la pertinence des trames audio de l'au moins une trame audio, pour obtenir une séquence de fonction de pertinence qui correspond à l'au moins une trame audio ;

le calcul (S1504) de la valeur maximum de la séquence de fonction de pertinence qui correspond à l'au moins une trame audio, pour générer une séquence de référence ; et

le calcul (S1505) des valeurs de crête de la séquence de référence, pour obtenir la séquence caractéristique de valeur de crête.

13. Procédé selon la revendication 12, dans lequel l'optimisation de la séquence caractéristique de pertinence en fonction du nombre total prédéfini de sections comprend :
l'acquisition (S1506) d'un intervalle de balayage qui correspond à un coefficient d'intervalle prédéfini ; et la régulation (S1507) de la séquence caractéristique de valeur de crête en utilisant l'intervalle de balayage qui correspond au coefficient d'intervalle prédéfini, la définition de la valeur numérique de l'élément caractéristique de valeur de crête qui correspond à la valeur de crête maximum dans l'intervalle de balayage qui correspond au coefficient d'intervalle prédéfini comme étant la valeur cible, et la définition des valeurs numériques des éléments caractéristiques de valeur de crête autres que l'élément caractéristique de valeur de crête qui correspond à la valeur de crête maximum dans l'intervalle de balayage qui correspond au coefficient d'intervalle prédéfini comme étant les valeurs initiales.

14. Procédé selon la revendication 13, dans lequel la détermination des temps de rupture de sections en fonction des valeurs numériques d'au moins un élément caractéristique dans la séquence caractéristique de pertinence qui a été optimisée comprend l'acquisition (S1508) des indices cibles qui correspondent aux éléments caractéristiques de valeur de crête dont les valeurs numériques sont les valeurs cibles provenant de la séquence caractéristique de valeur de crête qui a été régulée ; et le calcul (S1509) des temps de rupture de sections en fonction des indices cibles et d'un taux d'échantillonnage du fichier audio cible.

15. Dispositif de traitement audio, comprenant :

une unité d'acquisition (301), permettant d'acquérir des données de fichier d'un fichier audio cible ; une unité d'élaboration (302), permettant d'élaborer une séquence caractéristique de pertinence en fonction des données caractéristiques de pertinence entre des élément de composant des données de fichier ; le dispositif étant **caractérisé en ce qu'**il comprend en outre :

une unité d'optimisation (303), permettant d'optimiser la séquence caractéristique de pertinence en fonction du nombre total prédéfini de sections ;
une unité de détermination (304), permettant de déterminer des temps de rupture de sections en fonction des valeurs numériques d'au moins un élément caractéristique dans la séquence caractéristique de pertinence qui a été optimisée ; et
une unité de division de sections (305), permettant de diviser le fichier audio cible en sections par le nombre total prédéfini de sections en fonction des temps de rupture de sections.

acquiring a subtitle file that is corresponding to a target audio file, wherein the subtitle file consists of successively at least one single sentence of characters — S101

constructing a subtitle characteristic sequence according to the similarity degree between the at least one single sentence of characters, wherein the subtitle characteristic sequence comprises at least one characteristic element of characters — S102

optimizing the subtitle characteristic sequence according to a preset total number of sections — S103

determining section breaking times according to numerical values of the at least one characteristic element of characters in the subtitle characteristic sequence that has been optimized — S104

dividing the target audio file into sections of the preset total number of sections according to the section breaking times — S105

Fig. 1

acquiring a subtitle file that is corresponding to a target audio file, wherein the subtitle file consists of successively at least one single sentence of characters — S201

↓

determining the number of the characteristic elements of characters that construct the subtitle characteristic sequence according to the number of the at least one single sentence of characters — S202

↓

determining indexes of the characteristic elements of characters that construct the subtitle characteristic sequence according to the order of the single sentences of characters of the at least one single sentence of characters — S203

↓

setting all of the numerical values of the characteristic elements of characters that construct the subtitle characteristic sequence to be initial values — S204

↓

for any one target single sentence of characters of the at least one single sentence of characters, if a maximum similarity degree between the target single sentence of characters and the single sentence of characters following it is greater than a preset similarity threshold, changing the numerical value of the characteristic element of characters that is corresponding to the target single sentence of characters from the initial value to a target value — S205

↓

constructing the subtitle characteristic sequence according to the number, the indexes and the numerical values of the characteristic elements of characters that construct the subtitle characteristic sequence — S206

↓

counting the number of the characteristic elements of characters whose numerical values are the target values in the subtitle characteristic sequence — S207

↓

Yes ← determining whether the number is within a fault tolerance range that is corresponding to the preset total number of sections? — S208

↓ No

adjusting the value of the preset similarity threshold to adjust the numerical values of the characteristic elements of characters in the subtitle characteristic sequence — S209

↓

acquiring the target index that are corresponding to the characteristic elements of characters whose numerical values are the target values from the subtitle characteristic sequence that has been optimized — S210

↓

locating the single sentences of characters at section breaks in the subtitle file according to the target index — S211

↓

reading the section breaking times from the subtitle file according to the single sentences of characters at the section breaks — S212

↓

dividing the target audio file into sections of the preset total number of sections according to the section breaking times — S213

Fig. 2

device of audio
processing

acquiring unit — 301

constructing unit — 302

optimizing unit — 303

determining unit — 304

section dividing
unit — 305

Fig. 3

/ 302

**constructing unit**

| number determining unit | / 401 |

| index determining unit | / 402 |

| numerical value setting unit | / 403 |

| numerical value changing unit | / 404 |

| sequence constructing unit | / 405 |

Fig. 4

/ 303

**optimizing unit**

| number counting unit | / 501 |

| judging unit | / 502 |

| optimizing and processing unit | / 503 |

Fig. 5

/ 503

optimizing and
processing unit

first adjusting
unit / 601

second adjusting
unit / 602

Fig. 6

/ 304

determining unit

target index
acquiring unit / 701

locating unit / 702

time reading
unit / 703

Fig. 7

acquiring a subtitle file that is corresponding to a target audio file, wherein the subtitle file consists of successively at least one single sentence of characters /S801

↓

constructing a time characteristic sequence according to a time interval between the at least one single sentence of characters, wherein the time characteristic sequence comprises at least one time characteristic element /S802

↓

adjusting numerical values of the time characteristic elements in the time characteristic sequence according to a preset total number of sections /S803

↓

determining section breaking times according to the numerical values of the at least one time characteristic element in the time characteristic sequence that has been adjusted /S804

↓

dividing the target audio file into sections of the preset total number of sections according to the section breaking times /S805

Fig. 8

acquiring a subtitle file that is corresponding to a target audio file, wherein the subtitle file consists of successively at least one single sentence of characters    S901

↓

determining the number of the time characteristic elements that construct the time characteristic sequence according to the number of the at least one single sentence of characters    S902

↓

determining indexes of the time characteristic elements that construct the time characteristic sequence according to the order of the single sentences of characters of the at least one single sentence of characters    S903

↓

for any one target single sentence of characters of the at least one single sentence of characters, setting a time interval between the target single sentence of characters and the single sentence of characters that is immediately before the target single sentence of characters to be the numerical value of the time characteristic element that is corresponding to the target single sentence of characters    S904

↓

constructing the time characteristic sequence according to the numbers, the indexes and the numerical values of the time characteristic elements that construct the time characteristic sequence    S905

↓

looking up from the time characteristic sequence the first preset section number minus 1 of the time characteristic elements whose numerical values are in a decending order    S906

↓

adjusting the numerical values of the time characteristic elements that have been found to be the target values, and adjusting the numerical values of the time characteristic elements other than the time characteristic elements that have been found in the time characteristic sequence to be reference values    S907

↓

acquiring the target indexes that are corresponding to the time characteristic elements whose numerical values are the target values from the time characteristic sequence that has been adjusted    S908

↓

locating the single sentences of characters at the section breaks in the subtitle file according to the target indexes    S909

↓

reading section breaking times from the subtitle file according to the single sentences of characters at the section breaks    S910

↓

dividing the target audio file into sections of the preset total number of sections according to the section breaking times    S911

Fig. 9

device of audio
processing

acquiring unit — 1001

constructing unit — 1002

adjusting unit — 1003

determining unit — 1004

section dividing
unit — 1005

Fig. 10

— 1002

constructing unit

number
determining unit — 1101

index
determining unit — 1102

numerical value
setting unit — 1103

sequence
constructing unit — 1104

Fig. 11

1003

adjusting unit

element looking up unit / 1201

numerical value adjusting unit / 1202

Fig. 12

1004

determining unit

target index acquiring unit / 1301

locating unit / 1302

time reading unit / 1303

Fig. 13

acquiring audio data of the target audio file, wherein the audio data comprise at least one audio frame ⟋ S1401

constructing a peak value characteristic sequence according to A relevance of the at least one audio frame, wherein the peak value characteristic sequence comprises at least one peak value characteristic element ⟋ S1402

regulating the peak value characteristic sequence ⟋ S1403

determining section breaking time s according to the numerical value of the at least one peak value characteristic element in the peak value characteristic sequence that has been regulated ⟋ S1404

dividing to the target audio file into sections according to the section breaking times ⟋ S1405

Fig. 14

acquiring the type of the target audio file, wherein the type comprises: the dual sound track type or the single sound track type ⟋ S1501

if the type of the target audio file is the single sound track type, decoding the content output by the target audio file from the single sound track to obtain the audio data; and if the type of the target audio file is the dual sound track type, selecting one sound track from the dual sound tracks, and decoding the content output by the target audio file from the selected sound track to obtain the audio data; or processing the dual sound tracks into a mixed sound track, and decoding the content output by the target audio file from the mixed sound track to obtain the audio data ⟋ S1502

calculating the relevance of the audio frames of the at least one audio frame, to obtain a relevance function sequence that is corresponding to the at least one audio frame ⟋ S1503

calculating a maximum value of the relevance function sequence that is corresponding to the at least one audio frame, to generate the reference sequence ⟋ S1504

calculating the peak values of the reference sequence, to obtain the peak value characteristic sequence ⟋ S1505

acquiring a scanning interval that is corresponding to a preset interval coefficient — S1506

regulating the peak value characteristic sequence by using the scanning interval that is corresponding to the preset interval coefficient, setting the numerical value of the peak value characteristic element that is corresponding to the maximum peak value in the scanning interval that is corresponding to the preset interval coefficient to be the target value, and setting numerical values of the peak value characteristic elements other than the peak value characteristic element that is corresponding to the maximum peak value in the scanning interval that is corresponding to the preset interval coefficient to be the initial values ⟋ S1507

acquiring target indexes that are corresponding to the peak value characteristic elements whose numerical values are the target values from the peak value characteristic sequence that has been regulated ⟋ S1508

calculating the section breaking time according to the target index and the sampling rate of the target audio file ⟋ S1509

dividing the target audio file into sections according to the section breaking times ⟋ S1510

Fig. 15

device of audio processing

acquiring unit / 1601

constructing unit / 1602

regulating and processing unit / 1603

determining unit / 1604

section dividing unit / 1605

Fig. 16

/ 1601

acquiring unit

type acquiring unit / 1701

decoding unit / 1702

Fig. 17

1602

constructing unit

relevance
calculation unit — 1801

generating unit — 1802

sequence
solving unit — 1803

Fig. 18

1603

regulating and
processing unit

interval
acquiring unit — 1901

regulating unit — 1902

Fig. 19

1604

determining unit

target index
acquiring unit — 2001

time calculating
unit — 2002

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510270567
- CN 201510271769
- CN 201510271014

- CN 102467939 A
- WO 2014096832 A1
- US 20150045920 A1

**Non-patent literature cited in the description**

- **WEI CHAI et al.** Structural Analysis of Musical Signals for Indexing and Thumbnailing. *Proceedings 2003 JOINT CONFERENCE ON DIGITAL LIBRARIES, JCDL,* 27 May 2003, 27-34